(19) Europäisches Patentamt
European Patent Office
Office européen des brevets

(11) Publication number: **0 009 972**
**B1**

(12) # EUROPEAN PATENT SPECIFICATION

(45) Date of publication of patent specification: **04.05.83**

(51) Int. Cl.³: **H 01 M 4/76, B 23 P 15/12**

(21) Application number: **79302099.1**

(22) Date of filing: **03.10.79**

(54) **A tubular-type positive plate for a lead acid battery and method of manufacturing.**

(30) Priority: **10.10.78 US 949890**

(43) Date of publication of application:
**16.04.80 Bulletin 80/8**

(45) Publication of the grant of the patent:
**04.05.83 Bulletin 83/18**

(84) Designated Contracting States:
**AT BE CH DE FR GB IT SE**

(56) References cited:
**DE - A - 2 558 815**
**FR - A - 1 247 620**
**FR - A - 2 247 826**
**GB - A - 398 814**
**GB - A - 896 654**
**GB - A - 921 688**
**GB - A - 1 428 495**
**GB - A - 1 428 978**
**US - A - 2 847 496**

**CHEMICAL ABSTRACTS, vol. 52, no. 19, 10th October 1958, no. 16093b Columbus, Ohio, U.S.A.**

(73) Proprietor: **KOEHLER MANUFACTURING COMPANY**
**123 Felton Street**
**Marlborough, Massachusetts 07152 (US)**

(72) Inventor: **Guimond, Roy Aime**
**62 Montana Drive**
**Holden, Massachusetts 01520 (US)**
Inventor: **Reed, Nanci Williams**
**308 Concord Road**
**Sudbury, Massachusetts 01776 (US)**
Inventor: **Gulliksen, John Eric**
**19 Fox Hill Road**
**Shrewsbury, Massachusetts 01545 (US)**

(74) Representative: **Haggart, John Pawson et al,**
**Page, White & Farrer 27 Chancery Lane**
**London, WC2A 1NT (GB)**

(56) References cited:
**CHEMICAL ABSTRACTS, vol. 52, no. 11, no. 8801b, 10th June 1958 Columbus, Ohio, U.S.A.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

**EP 0 009 972 B1**

# A tubular-type positive plate for a lead acid battery and method of manufacturing

The invention relates to a positive plate for a lead-acid battery.

Lead-acid storage batteries customarily include positive and negative plates having grid structures which are supported in spaced relation in an electrolyte with an active material located around portions of the grid structures. Electrical energy is converted into chemical energy which is stored in the battery during charging and reconverted into electrical energy when the battery is discharged by means of the well known double sulfate reactions.

In such a battery corrosion of the positive grid structure tends to occur at vulnerable areas particularly at those points where internal stresses have been created during manufacture of the grid. These stresses tend to be maximized at "inside corners" of the lead alloy grid structure, i.e., those portions of the grid structure where surfaces intersect at some angle less than 180°. In this way battery life becomes materially shortened.

In providing a battery of longer operating life particularly under deep cycling conditions, it has been proposed to utilize a positive grid structure having an antimony grid content. However, while antimony improves the functioning of the active material at the positive plate, particularly under deep discharge, as well as strengthening the grid structure, a problem may arise. During charging the surfaces of the positive grid structure will release antimony. Some of this antimony is released from those positive grid surfaces in contact with active material into which it will be released and in which it will be retained. The remaining antimony released, i.e., that released without inhibition from grid surfaces not covered by active material, will be electrochemically attracted to the negative plate and deposited thereon producing contamination of the negative active material. When this contamination of the negative active material takes place, battery life is again significantly shortened.

This shortening of battery life occurs because the electrical potential required to disassociate the hydrogen and oxygen components of the electrolyte due to electrolysis at the negative plate is materially lowered by such contamination. This in turn necessitates more frequent addition of water to the electrolyte and, when the battery is to be charged to a constant potential or "back EMF", a greater portion of the charging current is used up by gassing (electrolysis) and overcharging of the battery plates. Since overcharge and its attendant corrosion of the grid structure of the positive plate is the primary cause of battery failure and, since gassing will increase the specific gravity of the electrolyte thereby accelerating corrosion of the positive grid parts, it will readily be seen that material reduction of antimony contamination of the negative active material will substantially increase battery life.

In addition, when the surfaces of a grid having an antimony content are exposed to the electrolyte during electrochemical formation and subsequent charging, a poisonous gaseous compound known as stibine ($SbO_3$) may be released from the cell into the atmosphere. This may become an occupational hazard in some cases and furthermore, if a battery with grids having an antimony content is provided with a catalytic recombination device of conventional nature, poisoning of the catalytic device may result thus causing failure of the recombination process.

Also in conventional practice, when electrochemically forming positive and negative plates in an acid bath in which the positive plate grid structure has an antimony content, it is desirable to employ separate formation containers for the positive and negative plates, to minimize antimony contamination of negative active material.

Furthermore, when electrochemically forming a positive plate in an acid bath as noted, the surfaces of its post or burning lug becomes electrochemically transformed to $PbO_2$. This $PbO_2$ must be removed with added expense and trouble in order to provide a clean lead surface for burning or for attaching a terminal clamp.

Finally, if a battery having a low maintainence characteristic is constructed having grid structures formed with little if any antimony content, these grid structures are relatively soft which presents difficulties in plate manufacture and which invites strengthening in some manner.

Various attempts have been made in the art to solve the corrosion problems indicated.

It is well known in the art to utilize a protective means at certain points in a battery of the lead-acid class.

For example, United States Patent 1,128,232 discloses a top bar and lug protector for a flat plate design which snaps into position, but the lug protection extends only to the strap.

United States Patent 1,171,597 shows a top protector that slips over plate and separators to hold the parts together. However, the patent stresses openings to permit electrolyte circulation rather than preventing it.

United States Patent 1,051,147 shows protector means for frame and top bar parts of a flat or pasted plate but does not protect post means.

United States Patent 1,379,854 discloses a celluloid sleeve shrunk over post means only and cemented to the cell cover.

United States Patent 1,580,596 discloses a post protector molded on the underside of the cell cover and enjoins the strap member but no

protection for grid surfaces.

United States Patent 2,120,822 discloses protective sleeves for the post means of a mine lamp battery and has no grid protection.

United States Patent 1,940,976 discloses perforated protector means for a grid and no protection for the lug.

Other United States patents disclosing partially protected grid structures include 2, 420,456; 2,647,158; 2,570,677; 1,605,968; 1,586,406; 1,422,815; 3,944,432; 1,364,011; 1,158,491; 3,247,023; 2,490,630; and 3,813,300.

A positive electrode for a storage battery is shown in GB—A—896 654 in which the top bar of the grid structure has a top cover of plastics material which extends over the tops of the tubes which hold active material. The cover is secured to the tubes by welding or an adhesive. The top bar may be coated with a corrosion resistant layer of lacquer.

A similar top cover is described in GB—A—1 428 978, in the form of an inverted trough-shaped plastics moulding which fits over the top and sides of the top bar and over the tops of the retaining tubes. The cover is heat-shrunk so as to grip the top bar and the tops of the tubes.

The invention as claimed is intended to provide a remedy to the problems referred to above by combining the grid structure of a positive plate with means arranged to enclose protectively all surfaces of the grid structure which are not in contact with active material so as to retard corrosion and in some cases prevent release of the antimony at some of the grid surfaces.

According to the invention there is provided a positive plate for a lead-acid storage battery, of the kind having a grid structure comprising a top bar, post means and spaced-apart current collecting spines joined to the top bar, tubes arranged to locate active material around the spines, and a grid complement member of a chemically inert material impermeable to the electrolyte which encloses the top bar and the post means and has depending parts which engage the tubes, characterised in that the depending parts of the grid complement member are arranged to fit tightly around the top bar and cover tightly all surfaces of the grid structure which are not in contact with active material, and the depending parts include tube insert elements which engage into the upper ends of the tubes so as to interlock the tubes with the grid structure, which tube insert elements enclose active material which is in contact with upper portions of the spines thereby providing lengthened current paths to those portions of the spines.

Further the invention includes a method of manufacturing a positive plate wherein the parts are first-assembled to constitute an unformed positive plate, the unformed positive plate is immersed in an acid bath, and the plate is formed electrochemically to produce a formed positive plate, characterised by, after said forming, removing a part of the grid complement member to uncover a section of the post means which is free from lead oxide coating which may result from the said electrochemical formation.

An advantage of the invention lies in the design of the protective grid complement which may be formed as a molded plastic part constructed of a shape suitable for overlying and mating with all portions of a grid structure which are not in contact with active material including specifically the top bar and spine portions of the grid structures as well as its post means.

A lead-acid battery utilizing positive plates of the invention has the low maintenance or maintenance-free performance of a lead-acid battery having no antimony in its positive plate grid structure on the one hand and the relatively long-operating life under deep discharge conditions of a positive plate whose grid structure has an antimony content on the other hand; and has increased positive plate grid strength, reduced weight and increased resistance to corrosive action during normal battery operation.

Another advantage offered by the invention is that when electrochemically forming both negative and positive plates, where the positive plate has a grid structure with an antimony content, in a common container and acid bath, there is no contamination of the negative active material.

The grid complement comprises a resilient enclosure body of a chemically inert material which when in place may exert compressive forces of a magnitude sufficient to retard contact of the electrolyte body with the positive plate grid means thus limiting release of antimony from those portions of the grid structure enclosed by the grid complement. The grid complement, for example, when in the form of a molded body, may have differing portions which may be fitted to the grid design in successive steps making use of suitable jig of holding frame means.

The term "chemically inert" as herein used is intended to refer to materials which are not acted upon or reactive to a substantial degree in the environment present in a lead-acid battery.

Some ways of carrying out the invention are described in detail below with reference to drawings which illustrate some specific embodiments, in which:—

Figure 1 is an elevational view partly in cross section illustrating one cell of a lead-acid storage battery which includes a positive plate having a grid complement attached thereto in combination with negative plate means, separator means and electrolyte,

Figure 2 is a detailed elevational view of grid structure of the plate of Figure 1,

Figure 3 is an end elevational view of the grid structure of Figure 2,

Figure 4 is a perspective view of a grid complement member of the invention,

Figure 5 is a side elevational view of the grid complement member of Figure 4,

Figure 6 is a cross sectional view of a lead-acid storage battery showing details of a tubular type positive plate of the invention including a grid structure and grid complement therefor,

Figure 7 is a cross sectional view taken on the line 7—7 of Figure 6,

Figure 8 is a cross sectional view taken on the line 8—8 of Figure 7,

Figure 8A is a cross sectional view taken at the line 8A—8A of Figure 6,

Figure 9 is an exploded view of the positive plate means shown in Figure 6,

Figure 9A is a detailed cross sectional view illustrating diagrammatically the formation of various chemical compounds on grid surfaces,

Figure 10A is a diagrammatic view of portions of the grid structure and grid complement of Figure 6 with the electrolyte indicated in broken lines and further indicating diagrammatically migration of antimony,

Figure 10B is a diagrammatic view illustrating a conventional grid structure generally corresponding to that illustrated in Figure 10A,

Figure 11A is a diagrammatic view of a grid structure in an electrolyte and showing a lengthened path of travel of sulfate ion movement towards the grid structure,

Figure 11B is a diagrammatic view illustrating a conventional grid structure and similar movement of sulfate ions with respect thereto,

Figure 11C is a cross sectional view taken on the line 11C—11C of Figure 11A,

Figure 11D is a cross sectional view taken on the line 11D—11D of Figure 11B,

Figure 12 is an elevational view of the grid complement member of Figures 4, 5 and 9 illustrated prior to being compressed and showing closure means at one end thereof,

Figure 12A is an isometric view and partial cross section of the grid complement member of Figure 12,

Figure 13 is a cross section taken on line 13—13 of Figure 12,

Figure 14 is a bottom plan view of the grid complement member of Figure 12,

Figure 15 is a perspective view of a modified form of grid complement member,

Figure 16 is a bottom plan view of the grid complement member of Figure 15,

Figure 17 is an end elevational view of the grid complement member of Figure 15,

Figure 18 is a side elevation of another modification of the grid complement member,

Figure 19 is a bottom plan view of the modification shown in Figure 18,

Figures 20, 21, 22, 23 and 24 are views illustrating steps in assembling the grid complement member of the invention on a grid structure and thereafter attaching tube means for receiving positive active material,

Figure 25 is a cross section taken on the line 25—25 of Figure 24,

Figure 26 is a diagrammatic view illustrating electrochemical formation of the positive plate of the invention combined with a negative plate in an acid bath and received in a common container,

Figure 27 is a similar diagrammatic view but showing conventional positive plate,

Figure 28 is another diagrammatic view illustrating a method of inhibiting the formation of $PbO_2$ on some positive grid surfaces during electrochemical formation of the positive plate,

Figure 29 is a detailed elevational view of a grid complement member mounted over a positive plate grid structure, shown fragmentarily and further illustrating a sleeve portion of the grid complement being removed to expose post means with a clean lead surface,

Figure 30 is an exploded view illustrating in perspective a composite grid complement structure including a top grid complement part and a lower tube fitting component in separate relationship,

Figure 31 is a view taken substantially on the line 31—31 of Figure 30 and illustrates the upper grid complement part attached to the lower tube fitting component and engaged in tube top means,

Figure 32 is an elevational view further illustrating details of the grid complement of Figure 31 detailed from the tube fitting means,

Figure 33 is a bottom plan view of the grid complement of Figure 32,

Figure 34 is an end elevational view of the tube fitting means of Figures 30 and 31 shown detached from the tube and grid complement components,

Figure 35 is a bottom elevational view of the structure of Figure 34,

Figure 36 is an elevation view of a tubular type plate showing in partial cross section a composite grid complement structure including a coated part attached to a tube fitting component,

Figure 37 is a detailed cross sectional view of a grid structure having another modification of coated grid complement, and

Figure 38 is a side elevational view of modified tube fitting means with which the grid and grid complement means of either Figure 36 or 37 may be combined.

The figures show improved positive plates for a lead-acid storage battery having grid structures protectively reinforced by grid complement means.

The improved plates include a newly designed grid structure and grid complement means of several different types. The grid complement means is in the form of one or more enclosure bodies of a chemically inert material which is impermeable to lead-acid battery electrolyte and which is/are selectively arranged about portions of grid structures to protectively reinforce same and cover surfaces not in contact with the electrolyte.

In one desirable form the grid complement

means is designed to be engageable within retaining means for active material. When the retaining means consists of tubes in which active material is contained, the grid complement means may consist of a unitary molded plastic part having insert portions which are engageable within the tops of the tubes, or may be a composite structure consisting of separately formed grid complement components which are engageable in the tops of the tubes. The composite grid complement structure may be engageable in retaining means for receiving a pasted material and the retaining means may constitute a part of the composite grid complement structure.

In the case of a tubular type plate there may also be provided an improved bottom structure consisting of unique insert means engageable in the bottom of tubes in which active material is contained.

Figure 1 shows one cell of a lead-acid battery denoted by arrow B. In this cell, negative plates, separators and positive plates of the invention are illustrated. The positive plates are of the tubular type but may be a pasted type. The grid structure of the improved plates are free of or have a very low antimony content.

The battery B includes a container or jar 3 in which is received an electrolyte 4. Immersed in the electrolyte 4 are negative plates 6 interconnected by bridge means 7, each plate having a negative grid 8 around which is a negative active material indicated by numeral 10. A negative post or lug 12 extends through a cell cover 14, being sealed by O-ring 16 and epoxy resin 18 in a conventional manner. Also immersed in the electrolyte 4 are separators 22 and improved positive plates 2. The positive plates 2 each include a grid complement of the invention denoted by arrow 26 and a grid structure shown in dotted lines and generally denoted by arrow 24. The grid structure 24, which has no antimony content, is shown removed from the battery B in Figures 2 and 3. In Figures 4 and 5, the grid complement 26 is shown also removed from the battery B.

The grid structure 24 is formed of a lead alloy which may be cast while in a molten state in the usual manner, and includes a current carrying top bar 30 from which there projects post means 32 which may also serve as a burning lug for interconnecting a plurality of plates where there are two or more plates in a cell. The term "post means" as hereafter used is intended to refer to either a post or burning lug. Extending downwardly from the top bar 30 in spaced apart relation are a plurality of current carrying spines 29.

The top bar 30 has a cross-sectional area that is somewhat less than that of a conventional top bar, and at their upper portions 29a at points of junction with the top bar 30, the spines 29 are of cross-sectional area substantially smaller than the cross-sectional areas of tubes in a coventional plate. Upper ends of conventionally formed spines have been enlarged to a cross-sectional area and configuration approximately equivalent to that of conventional tube tops in order that upper ends of these tubes may be fitted snugly around these enlarged upper portions of the spines. With the new grid design of Figures 2 and 3 substantial reduction in weight and material cost may be realized. Because the grid 24 has little or no antimony content, it tends to be lacking in strength, and the grid complement 26 shown in Figures 4 and 5 constitutes a reinforcing body which strengthens the grid structure.

The top bar and upper portions of the spines are vulnerable at certain points to corrosion and the grid complement 26 inhibits corrosion and as a result grid sections at the top bar and joining spine parts may have a cross-sectional area smaller than that of similar conventional grid portions.

The grid complement 26 as shown in Figure 4 is preferably molded in one piece from a resilient plastic material such as a compound of the polyolefin family or a compound of the polyurethane, epoxy resin or rubber families, and constitutes an enclosure body which is chemically inert and impermeable to battery electrolyte. This enclosure body is designed to be located over the grid structure 24 of Figures 2 and 3 so as to fit tightly around the top bar 30, the post means 32 and the upper portions 29a of the spines 29. In some instances it may be desirable to apply a thin coating or film of adhesive or filler material to the grid structure or to inner surfaces of the enclosure body prior to being located over the grid structure. A desirable resistance to bending or other deformation is induced in certain portions of the grid by the enclosure body. The negative plate 6, Figure 1, may be similarly constructed.

The grid complement 26 includes an elongated top bar enclosure 36, a sleeve portion 37 in which the post 32 shown in Figure 2 is received, and integrally formed insert portions 39, 41, and 43 which are arranged around the upper portions 29a of the spines 29 in positions suitable for engaging within and securing tubular elements of the plate.

Figure 6 illustrates a battery B1 which includes positive plates having a grid structure and grid complement means similar to those illustrated in Figures 1 to 4. Also shown are tubes and active material commonly utilized in tubular type positive plates, and improved bottom bar means for engaging in the lower ends of the tubes.

The positive plate of Figures 6 to 8 does have an appreciable antimony content which is capable of being released from the grid surfaces to thereafter migrate through the electrolyte body. The grid complement means inhibits such release of antimony from some portions of the grid structure.

The battery B1 has a container or jar 31 in which is received an electrolyte body 33.

Immersed in the electrolyte body 33 are positive plates of the invention indicated by arrow 34 and negative plates denoted by numeral 36a.

The top of the battery B1 is closed by a cell cover 38 through which there extends a negative post 40 which is received in a depending part 42 and is sealed by an O-ring 44 together with a layer of sealing compound such as epoxy resin 46. A bridge portion 48 interconnects a plurality of negative plates with the negative post 40.

Components of the positive plate 34 are indicated at the left-hand side of the battery, and include a grid structure 62, the grid complement means 60 of a chemically inert nature, tubes T1 to T6 containing active material around the grid spines, and botom bar means 61.

The tubes T1, T2, T3, T4, T5 and T6 are of conventional type made of woven glass fibres with a perforated outer jacket of suitable plastics material, e.g. polyvinyl chloride, and are of rectilinear cross-sectional shape. Contained in the tubes are quantities of positive active material indicated at M1 and M2.

The grid structure 62 is formed from a lead alloy having an antimony content and comprises a top bar 50, a post 52, and spaced apart spines 53, 54, 55, 56, 57 and 58. The portions of the spines which join with the underside of the top bar are of the same cross-sectional area as the remainder of the spines and the joining portions cooperate with spacially designed portions of the grid complement means to cover the top bar surface tightly while also cooperating with insert portions of the grid complement means to secure the tubes.

The grid complement 60 thus mates with and surrounds portions of the grid structure 62 and acts as an enclosure body of chemically inert material selectively arranged about portions of grid 62 to protectively reinforce the grid and to inhibit migration of antimony from grid surfaces which are not in contact with active material.

The grid complement 60 is shown in more detail in Figures 7, 8 and 9 and comprises a resilient body, a top bar enclosure body 61a, a sleeve portion 64 through which post 52 projects, and a plurality of tube insert elements denoted in Figure 9 by arrows 66, 67, 68, 70, 72 and 74, which are designed to be engaged in a compressed state against inner top surfaces of respective tubes T1, T2, T3, T4, T5 and T6 so that the tubes are held securely with respect to the grid structure and the tube walls are maintained in tension.

In Figures 6, 7, 8 and 8A the tube inserts are shown in the compressed position they assume when engaged against inner surfaces of respective tubes.

In Figures 9, 12, 12A, 13 and 14, the grid complement 60 is shown as a molded plastic piece as it exists prior to being compressively engaged around the grid structure 62.

The enclosure body 61a of the grid complement is formed with spaced apart diverging walls 62a and 62b which are resiliently joined together at 62′. The diverging walls 62a and 62b are further formed with relatively thin flexible web portions 62c and 62d which extend in substantially parallel spaced relation to one another as shown in Figure 12A. These flexible web portions have supported therealong enclosure parts 62k and 62m for engaging around the top bar, the grid and also around the upper portions of the spines at their points of junction with the top bar. The enclosure parts 62k and 62m have edges 62e and 62f which abut as shown in Figure 7.

At intervals the edges 62e and 62f are formed with recesses as 62g, 62h, which are designed to surround and mate with the tops of the spines 53a, 54a, which are shown in Figure 9. The edges 62e and 62f are shown in more detail in Figures 13 and 14 and, when in abutting relation as shown in Figure 7, cover all of the top bar 50 except its opposite ends. The top bar ends may be covered by means of end walls 62j as shown in Figure 12.

The flexible web portions 62c and 62d have extending outwardly in angularly disposed relationship therefrom opposite outer insert sides 80, 82, 84, 86, 88, 90, 94, 96, 98, 100, 102, Figure 14.

There are also inner insert sides which project from the outer insert sides and from enclosure parts 62k and 62m and which present edges of a size and shape such that, when opposite outer insert sides are moved toward one another, the edges 62e and 62f and the edges of the inner insert sides meet one another and, in combination with the abutting enclosure parts 62k and 62m, define partially enclosed spaces occurring around the upper ends of the spines 53a, 54a, 55a, 56a, 57a and 58a.

Spine engaging rib portions 80c, 82c, 84c, 86c, 88c, 90c, 92c, 94c, 96c, 98c, 100c, and 102c project from respective outer insert sides. These rib portions are shaped to fit compressively against respective spine surfaces when the several insert sides are brought together in an operative position. Formed along the outer insert sides are barbs as shown in Figure 9 at 109, 111, 113, 115, 117 and 119. The barbs are V-shaped and constitute means for engaging and displacing outwardly portions of respective tube tops which they contact as shown in Figure 7, and which, in combination with the spine engaging rib portions, ensure tight engagement between the grid complement and the tubes.

Thus the cooperating parts of the resilient grid complement means, when comressibly located around the top bar and with the inserts in the tubes, cover and tightly engage against all surfaces of the grid structure which are not in contact with positive active material and constitute a barrier which is found to be capable of

substantially inhibiting release of antimony from the grid structure into the electrolyte body.

Improved bottom bar means 61 is employed in place of the conventional bottom bar means employed with tubes. A preferred form of the bottom bar 61 is shown in Figure 9, and includes a plurality of interconnected bottom bar inserts generally indicated by arrows 110a, 112a, 114a, 116a, 118a and 120a, whose construction resembles that of the top bar inserts and are designed to fit snugly within the respective bottoms of tubes T1, T2, T3, T4, T5 and T6 as illustrated in Figures 6 and 9. Included in the bottom bar 61 is a bottom side 110 designed to be supported in the battery case 31. Each bottom insert includes spaced apart vertical walls 122a and 124a and intervening vertical walls 110d and 110c. These vertical walls define spaces in which active material is received and the electrolyte communicates with the active material through tube walls T1 and also through perforations 113a and 113b in certain of the insert walls as is shown in Figures 7 and 9. The improved bottom bar provides for utilization of larger quantities of positive active material as compared to quantities employed in a conventional bottom bar structure for a positive plate wherein the lower ends of the spines are ordinarily received directly in the bottom bar in an opening formed therein. The bottom bar insert engages only with lower ends of tubes and is an additional advantage when assembling the components.

V-shaped notches 110f and 110g are provided in the intervening vertical wall portions 110c and 110d. These notches temporarily deform the walls 110d and 110c slightly inwardly during assembly. Resilient rib means 122b and 122c are provided and are designed to interlock and which limit inward bending as well as inducing return of walls 110c, 110d to a normal straightened position. Bending the walls facilitates the entry of the inserts in respective tube bottoms, insures rapid assembly of all of the inserts simultaneously and eliminates bending of spines induced by the installation of conventional bottom bar means. Barbs 110i on the vertical walls 122a and 124a, are similar to those illustrated in the top bar inserts and which function in a similar manner to secure the tubes more firmly in fixed relationship to the bottom bar. Preferably the bottom bar 61 is formed of a material which is not impermeable to electrolyte in order to further facilitate communication between the electrolyte body and adhesive material.

The battery B1 operates in accordance with the well-known double-sulfate reactions at the positive and negative plates. All surfaces of the positive plate grid which are not covered by the active material are provided with barrier means which prevents contact of the electrolyte with these surfaces and prevents release of antimony therefrom. Concurrently antimony present in the spines is released to the active material where it is absorbed, thereby greatly improving the cohesion of the positive active material and its contact with the spines. There is thus realized the desirable result of long-operating life particularly under deep discharge conditions in a battery that requires little or no maintenance and battery B1 has a substantially constant charging characteristic and low self-discharge characteristic during its entire life.

Figure 10B illustrates diagrammatically the manner in which antimony in a conventional positive tubular plate tends to migrate from grid surfaces through an electrolyte body 140 to the active material of a negative plate (not shown). The grid structure of this conventional positive plate includes a top bar 130, a post 132 and spines 134. Tubes 136 maintain a positive active material 138 in contact with the spines 134.

Antimony released from the surface of spines 134 in the electrolyte is indicated by small arrows a1, a2, a3 and, as shown, contacts the positive active material and is contained within the active material in the space defined by the tubes 136 provided that the antimony at the surfaces of spines 134 is not of sufficient quantity to saturate the active material in the space defined by the tubes 136 during the expected life of the battery. However, surfaces of the top bar 130 and post 132 which are not in contact with positive active material release antimony as indicated by large arrows as A1, A2, A3, and it is this released antimony which migrates through the electrolyte body 140 and contaminates the negative active material of the battery to cause battery failure, increased maintenance, increased self-discharge, change in charging characteristic and shortened operating life.

Figure 10A illustrates comparatively a positive plate of the invention which includes a grid top bar 142, a post 144 and spines 146 in an electrolyte body 160. Positive active material 148 is held around the spines 146 in tubes 150. Numeral 152 denotes the top bar enclosure portion of a grid complement which also includes tube inserts 154 and a post sleeve 156. Antimony released from the spines 146 is indicated by small arrows as a4, a5, a6, and, as shown, is contained by the active material 148 which is materially improved as previously disclosed. It will be noted that additional quantities of active material are received within the inserts 154 which is obviously advantageous.

Large arrows as A4, A5, A6 in broken lines suggest inhibition of release of antimony from the top bar 142 and the post 144 by grid complement parts 152 and 156. All surfaces of the grid structure which are not covered with active material are maintained out of contact with the electrolyte 160 to constitute an improved step in lead-acid battery operation.

In addition to preventing antimony contamination of negative active material, the release of poisonous stibine gas may be

inhibited since no antimony bearing surface is in direct contact with the electrolyte.

Operation of a normal lead-acid battery may be considered to take place according to the well-known double-sulfate reaction,

(1) $PbO_2 + Pb + 2H_2SO_4 \leftrightarrows 2PbSO_4 + 2H_2O$

where this equation represents discharge when read from left to right and charge when read from right to left.

Pure lead surfaces such as may be present in a positive grid structure may, upon discharge, become sulfated with an emission of hydrogen according to the following reaction

(2) $Pb + H_2SO_4 \rightarrow PbSO_4 + H_2$

Upon recharging the $PbSO_4$ on the grid surfaces will be transformed into $PbO_2$ and Pb as expressed in the equation (1) above noted.

However, should there be an insufficiency of sulfate ions present in the electrolyte around some portions of the grid structure during discharge, some of the $PbO_2$ present at these portions of the grid surface will not be transformed into $PbSO_4$, but rather into $Pb(OH)_4$, according to equation

(3) $PbO_2 + 2H_2O \rightarrow Pb(OH)_4$

Further reduction of the tetravalent Pb into a bivalent state will reduce the $Pb(OH)_4$ to $Pb(OH)_2$ which will be soluble in the electrolyte. When this $Pb(OH)_2$ dissolves, a clean lead surface is exposed which will, upon recharge, revert to $PbO_2$ and again take part in the reaction previously noted in equation (1).

Sulfate ion insufficiency is most likely to occur during deep discharge since the sulfate ions are utilized in transforming the active $PbO_2$ into $PbSO_4$. Thus the specific gravity of the electrolyte will approach that of water, and under this condition $Pb(OH)_4$ and subsequently, $Pb(OH)_2$ will be formed.

The foregoing will continue as the battery is cycled with the grid structure gradually corroding into $Pb(OH)_2$ and dissolving into the electrolyte.

It will be noted that the specific gravity of the electrolyte will become closest to that of water around those portions of the positive plate where the electrochemical activity has been greatest, that is, at the uppermost portions of the spines. Here the path of current flow between the positive and negative plates is shortest and therefore the current density is highest. This, of course, is at "inside corners" of the grid structure, that is, at the junctions between the spines and the top bar, where stresses formed internally of the grid structure during molding or casting are at a maximum.

In addition, should conditions arise such that a Pb surface is in direct contact with a $PbO_2$ surface in the presence of water, a miniature shortcircuited "battery", having Pb as its negative electrode, $PbO_2$ as its positive electrode, and $H_2O$ as its electrolyte, will result. Under these conditions since no sulfate ions will be present, the Pb electrode will be entirely consumed by the formation of $Pb(OH)_2$. However, if sulfate ions are made available, $PbSO_4$ will be formed over the Pb surface which will stop these reactions.

For these reasons it is most desirable to:

(1) protect all exposed surfaces of the grid fully from contact with the electrolyte so that they cannot enter into charge-discharge reactions, and

(2) reduce the current density at the junction points between the top bar and spines to such a degree that the double-sulfate reactions at these points are substantially inhibited, and

(3) to insure the presence of a quantity of sulfate ions at these points of the grid structure sufficient to replace those sulfate ions used up by the double-sulfate reactions, thereby maintaining the specific gravity at a pH sufficient to preclude the formation of $Pb(OH)_4$ and subsequent $Pb(OH)_2$ at the aforementioned vulnerable junction points.

Figures 11B and 11D illustrate diagrammatically typical grid corrosion areas in a conventional tubular plate including the surface 164 of a grid post 166, the surface 168 of a grid top bar 170, and the surface 172 of spines 174. Arrows as A7, A8, A9 indicate diagrammatically ion diffusion and thus current flow, and flow arrows A7 and A8 are directed especially to grid areas particularly vulnerable to previously disclosed corrosion processes at points where the spines 174 join the top bar 170. Arrow 9 indicates another vulnerable point where the post 166 joins the top bar 170. In Figure 11D current flow, indicated by arrows 11E and 11F, is directly through the tube walls 11G and the active material 11H to the spines 11J.

In Figures 11A and 11C there is illustrated diagrammatically a positive grid of the invention which includes a top bar 178, a post 180 and spines 182. It will be seen that the grid complement member 184 overlies and protects all surfaces of the post and top bar against contact with the electrolyte body and thereby blocks flow of current as indicated by broken arrows A14 and A16. Also, by means of the depending inserts 186, movement of sulfate ions to the surface of the spines 182 is diverted along lengthened paths of travel as indicated by the curved arrows A10, A11, A12.

Since current density during discharge is dependent upon availability of sulfate ions the relatively longer paths indicated by A10, A11 and A12 will produce a reduced current density at these points. However sulfate ions will be available at these points and thus corrosion will be lessened.

Figure 11C illustrates how with the positive plate of Figure 11A the grid complement 11K

is provided with openings 11M through which a limited sulfate ion diffusion, and thus current flow, takes place along a lengthened path. Current density is reduced, corrosion of spine surfaces is materially lessened and increased spine life is realized.

The grid complement means illustrated in Figures 1 to 14 embodies the concept of utilizing an enclosure body of a chemically inert material occurring as a molded plastic part to protectively reinforce grid structures of a tubular type plate.

Alternative forms of grid complement means are illustrated in Figures 15 to 19 and may be employed to carry out improved methods of making and assembling positive and negative plates of a tubular type as illustrated in Figures 20 to 33 and may be combined with other grid complement parts to form composite grid complement means for plates of tubular type as shown in Figures 30 to 38.

When making plates of the tubular type, the tubes may be of cylindrical shape and the grid complement means is modified, as illustrated in Figures 15 to 19, to provide inserts of a shape suitable for fitting within the cylindrical inner surfaces of the tubes. As shown in Figures 15 and 16 a grid complement member generally denoted by arrow 192 includes a top bar enclosure part 194, a sleeve 196 and a plurality of insert elements 198, 200 supported at the lower side of part 194, These insert elements are of a semicylindrical shape and have spine engaging ribs as 202, 204. When the semicylindrical portions are brought together they form cylindrically shaped inserts which are engageable in cylindrical tubes.

The grid complement sleeve 196 may have a tapered shoulder 196a which has a cylindrically shaped extension 196b of reduced diameter.

Figure 18 illustrates a grid complement means generally denoted by arrow 210 which may be employed with tube means designed to enclose a plurality of grid spines rather than a single spine. A top bar enclosure part 212 has insert portions 216 and 218 in which are provided ribs 220, 222. When the insert portions are compressed around a grid structure, its spines are engaged by the ribs 220, 222. The insert portions 216, 218 are received within tubes which are suitably shaped to mate therewith.

Figures 20 to 25 illustrate a method of assembling the grid complement means on a positive plate grid. This assembly procedure includes steps forming an important part of an improved method of making battery plates further illustrated in Figures 26 to 29.

In Figures 20 to 25, there is illustrated a grid structure denoted by arrow 223 of a form similar to that shown in Figure 9. The grid structure, as is customary in conventional plate making, is molded from a lead alloy to provide a post 226, a top bar 228 and spines 230 which have fins 232. The grid structure is supported either manually or by mechanical means in a horizontal position as shown in Figure 20 in juxtaposition to a grid complement member generally denoted by arrow 234. By mechanically supporting the grid structure 223, which may be of a readily deformable nature, there is less likelihood of bending of the grid components. The grid complement member 234 is supported on a movable base or table 236 which is arranged in spaced apart relation to jig element 238 adapted to be fixed to a wall or other suitable abutment.

The jig element 238 may be of metal or plastic and is formed with a cylindrical hole 240 which is of a size suitable for receiving an end of the post 226 and is also constructed with an annular shoulder 242 against which the end 244 of the sleeve 246 of the grid complement may abut.

With the parts arranged as described, the grid structure is advanced, either manually or mechanically, to locate the post 226 in the cylindrical hole 240 of the jig part 238 as shown in Figure 21 with the end 244 of the sleeve 246 abutting against the annular shoulder 242 of jig 238. Prior to advancement of the grid structure, the post 226 and top bar 228 or the inner surfaces of the grid complement may be coated with a cement or packing material. During the advancement of the post 226 through sleeve 246, the sleeve become longitudinally compressed due to frictional forces thereby enlarging its internal diameter so as to further facilitate progressive advancement of the post 226.

The grid structure continues to advance to a point at which the top bar 228 engages against enclosure means 248. The jig part 238 is then retracted, allowing the sleeve 246 to revert to its normal size and shape, thus insuring a tight fit between itself and the post.

At this point of travel of the grid structure, enclosure means 248 has become located between forming jaws 250, 252.

As the grid structure and grid complement are further advanced, these forming jaws 250, 252, engage the inserts 254, 256, forcing them into a position substantially parallel to the spines 230. At a still further point of travel, the forming jaws 250, 252, move toward one another thereby compressing the inserts 254, 256, into the position shown in Figure 22 in readiness for insertion into the tubes 259.

The tubes 259 are a set of tubes as shown in Figure 9 and may be moved either manually or mechanically into a position as shown in Figure 23. The inserts 254, 256, will then become inserted within ends of the tubes 259. Figure 24 illustrates the inserts 254, 256 in a fully inserted position in the tubes 259 and engaged with spines 230, and also shows the forming jaws 250, 252 retracted with barbs 258, 260, pressing outwardly against inner wall surfaces of respective tubes. Figure 25 is a

partial cross-section of the assembly of parts shown in Figure 24 and illustrates the abutting relationship between spine engaging ribs 253 and the spines 230.

The process steps illustrated in Figures 20 to 25 inclusive provide plates which, as is conventionally the practice, require further chemical treatment by well-known techniques. These techniques include sulfation of active material and electrochemical "forming" treatment by means of which an "unformed" plate is initially charged in an acid bath of relatively low specific gravity to provide a "formed" plate. This "formation" turns the active material of a positive plate into $PbO_2$. In this procedure it is necessary that there be present in the acid bath both positive and negative electrodes, one of which may be a "dummy".

Figure 27 illustrates diagrammatically a conventional formation treatment carried out in a container 270 in which there is relatively low specific gravity sulphuric acid 272. An unformed positive plate 274, having a grid structure which has an antimony content, and an unformed negative plate 276 are immersed in the acid 272. An electrical current then applied will "form" the plates to their proper respective polarities.

However, antimony, as indicated diagrammatically by arrows 278, 280 will be released from exposed surfaces of the positive grid structure 275 and will become deposited upon the active material surfaces of the negative plate 276, thus causing undesirable changes in the negative plate.

Substitution of a dummy electrode containing no antimony for the positive plate will obviously preclude transfer of antimony and subsequent contamination of the negative active material. This is the conventional practice where a relatively high quality negative plate is desired. However, the dummy positive electrode is rapidly transformed in $PbO_2$, in which state it disintegrates into a sludge. This necessitates relatively frequent cleaning of the container and replacement of the dummy electrode. Also, the positive plate must be formed in a separate container against a dummy negative electrode. Elimination of this antimony contamination by some method will be economically advantageous for the reasons cited. Figure 26 illustrates diagrammatically such a method.

In Figure 26 a container 282 holds an acid body 284 in which there is a positive plate 286 of the invention, substantially similar to that shown in Figure 7, and a negative plate 288. Electrochemical formation is carried out in the manner already described except that no antimony is released from the positive grid surfaces to become deposited upon active material of the negative plate 288. The grid complement 283 which overlies the surface of the positive grid functions to inhibit or to substantially reduce release of antimony as suggested by the broken arrows 290 ans 292. All surfaces of the positive grid structure which are not contact with active material of the positive plate have thus been effectively prevented from coming into contact with the acid body 284 and no transfer of antimony to the negative active material takes place. Therefore, both high quality positive and negative plates may be formed in a common acid bath received in a common container, thus achieving economic advantages.

Advantages result from the common acid bath formation described. Usually plates were formed separately, i.e. positive plates in one acid tank and negative plates in another, dummy electrodes must be used, and therefore more tanks and charging rectifiers will be required than is the case when plates can be formed together.

Forming plates together may eliminate some of these difficulties although, in some cases, better plates may result from separate formation. However, the main reason for separate plate formation is to prevent antimony contamination of negative active material during formation when the grid structure of the positive plate has an antimony content. Therefore by utilizing a grid complement of the invention antimony transfer is eliminated or substantially inhibited thus making the formation of positive and negative plates together a practical procedure except in the most exacting cases.

It is well known that the electrochemical formation of any conventional positive plate produces oxidation of surfaces of the positive grid structure, and results in a surface coating of $PbO_2$ on the post which must be removed from those portions of the post to which an electrical connection is to be made. This coating of $PbO_2$ is conventionally cleaned or brushed from these surfaces which may produce an occupational hazard from airborne lead dust or particles. In addition this coating of $PbO_2$, if not removed properly from those portions of the post which pass through a cell cover, will substantially inhibit satisfactory sealing of the post in the cover.

Figure 28 illustrates diagrammatically a method whereby the formation of the $PbO_2$ coating on portions of the post of a positive plate may be substantially inhibited. Positive plates 298 and some negative electrodes (not shown) are immersed in an acid bath 296. A grid complement 300 overlies the grid structure 302 of each plate 298. Oxidation occurs at surfaces of the spines in the usual manner as indicated by small arrows 299 but is prevented from occurring at those grid surfaces covered by the grid complement as indicated diagrammatically by the broken arrows 304, 306.

A further step in the method introduced in Figure 28 is illustrated in Figure 29. The grid complement 300 has a sleeve part 301 which protectively encloses lead surfaces of the post 307a throughout a portion of its length during formation in the acid bath 296, so that $PbO_2$

may only be formed at the surface of the exposed top end 305.

When the positive plate is removed from the acid bath 296, and before the plate is located in a battery cell, a portion 303 of the sleeve 301 is cut away and removed as indicated diagrammatically in Figure 29. This exposes a remaining post part 307 having a clean lead surface. The upper coated end 305 may be cut off to leave a suitable post terminal surface for making an electrical connection.

Figures 30 to 35 illustrate grid complement including separately molded plastic pieces of resilient chemically inert material which may be employed to provide an alternative way of protectively enclosing a grid structure as well as engaging within and securing active material retaining means such as the tubes previously described.

A molded lead alloy grid structure 338 includes a top bar 340 having a post 342 and a plurality of spaced apart spines 344, 346 depending therefrom. Immediately above the grid structure is one component part 347 of a composite grid complement, which component 347 has a top bar enclosure part 348 for enclosing portions of the top bar 340, and a sleeve portion 350 formed with a tapered upper end 352. A second component of the composite grid complement is indicated generally by arrow 370.

The component 347 of the composite grid complement means is further illustrated in Figures 32 and 33 in the form of a molded plastic part as it appears prior to being compressed around the grid structure in the position illustrated in Figures 30 and 31.

The molded plastic part 347 has depending sides as 356 which terminate in abutting edges 358, 360 and, when the depending sides are compressed around the top bar 340 as indicated in Figure 31, these edges 358 and 360 meet to enclose completely parts of the top bar occurring between the spines 344, 346. At spaced apart points along the edges 358, 360 are recesses as 362, 364 which are designed to be located around and mate with surfaces of respective spine portions joining with the top bar when edges 358 and 360 are compressed together.

Also provided along opposite lower sides are retainer flanges 366, 368 which provide for engagement of the component 347 with the second component 370 of the composite grid complement. This second component 370 consists of a molded plastic piece as illustrated in Figures 34 and 35 and which comprises a tube fitting member made up of a plurality of tube insert portions 376 connected together. Part 370 employed in combination with the component 347 of the composite grid complement provides an alternate method of securing tube elements around the spines of a grid structure.

Each of the tube insert portions 376 is formed with walls of a shape and size designed to fit snugly inside respective tops of tubes 380 in spaced relation to respective spines 344, 346. The tube inserts 376 are secured together by a channelled upper portion 382 having spaced apart channels 390, 392 which are engageable with the retainer flanges 366, 368 of the component 347 to secure both components 347 and 370 in interlocked relationship about the grid 338. Each of the insert portions 376 is formed with a spine aperture 374 through which spines are received in snugly fitted relationship. Opposite lower parts of the insert portions 376 are also formed with barbs 378, 379 which engage inner top surfaces of tube members 380.

This composite grid complement means provides an alternative method of assembling a grid structure within tube tops and such a method may be desirable in some instances. The spaces defined by the inserts also provide room for retaining additional active material. In addition, corrosion at vulnerable points of the grid structure is inhibited.

It may also be seen that some of the insert walls may be formed with V-shaped recesses 383 to provide for easier deformation of insert portions to facilitate engagement of these inserts within respective tube tops.

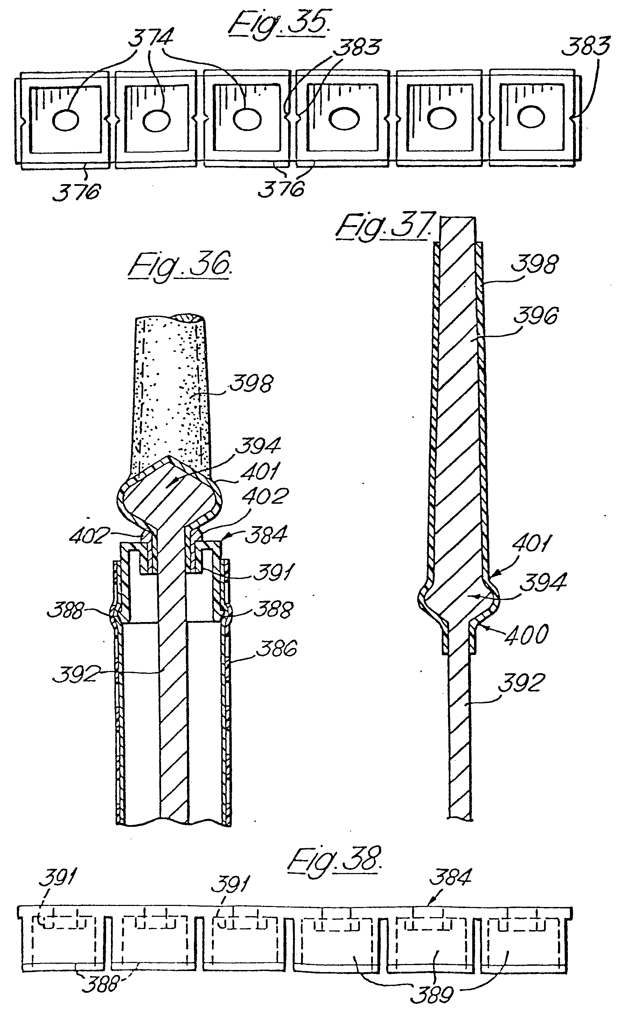

Figures 36 to 38 illustrate a modified form of composite grid complement in which tube fitting means may be combined with a layer or coating of a chemically inert material in place of the component part 347 of Figure 30.

Portions of the grid structure, including the top bar 394, post 396 and portions of spines 392 are covered with a layer or coating 398 of a chemically inert material which is impermeable to electrolyte. This is illustrated in Figure 37. The coated grid structure may then be engaged in the tube inserts.

The layer or coating 398 may be applied in various ways as by dipping, brushing or spraying. However, in one preferred method of application, the coating may be applied by electrostatic deposition and it is this formation which has been illustrated diagrammatically. It is known that electrostatically depositing material upon surfaces which are joined together will result in a coating of a greater thickness at inside corners. Advantage is taken of this characteristic to provide the coating 398 with relatively greater thickness at precisely at those points 400, 401 of greatest vulnerability of the grid structure, thus providing a significantly improved protective barrier.

As shown in Figure 38 the tube fitting means 384 comprises a plurality of tube inserts 389 connected together. The inserts engage within tubes 386 and are secured by barbs 388 around which the inner sides of the tubes are extended and secured in the manner previously disclosed. Each of the inserts 389 is further formed at its top with a tubular depending spine retainer part 391 made of a size and shape to enclose the coated portions of a respective

spine 392.

The coated grid with its spines which extend through the parts 391, is further sealed by means of an adhesive such as an epoxy resin 402.

## Claims

1. A positive plate for a lead-acid battery, of the kind having a grid structure (62) comprising a top bar (50), post means (52) and spaced-apart current collecting spines (53 to 58) joined to the top bar, tubes (T1 to T6) arranged to locate active material (M1) around the spines (53 to 58), and a grid complement member (60) of a chemically inert material impermeable to the electrolyte which encloses the top bar (50) and the post means (52) and has depending parts (66 to 74) which engage the tubes (T1 to T6), characterised in that the depending parts (66 to 74) of the grid complement member are arranged to fit tightly around the top bar (50) and cover tightly all surfaces of the grid structure (62) which are not in contact with active material (M1), and the depending parts (66 to 74) include tube insert elements (80, 82, 84, 86, 88, 90, 92, 94, 96, 98, 100, 102) which engage into the upper ends of the tubes (T1 to T6) so as to interlock the tubes (T1 to T6) with the grid structure (62), which tube insert elements (80, 82, 84, 86, 88, 90, 92, 94, 96, 98, 100, 102) enclose active material (M1) which is in contact with upper portions of the spines (53 to 58) thereby providing lengthened current paths to those portions of the spines.

2. A battery plate according to Claim 1, characterised in that the grid complement member (60) is made of a resilient material and is folded around the top bar.

3. A battery plate according to Claim 1 or Claim 2, characterised in that the tube insert elements (80, 82, 84, 86, 88, 90, 92, 94, 96, 98, 100, 102) which enclose active material (M1) in contact with the upper portions of the spines (53 to 58) provide lengthened paths of sulfate ion diffusion around said spine portions.

4. A battery plate according to Claim 3, characterised in that the depending parts (66 to 74) of the grid complement member (60) have portions (62g, 62h) which engage the spines (53 to 58) where they are joined to the top bar (50).

5. A battery plate according to Claim 3 or Claim 4, characterised in that the depending parts (66 to 74) of the grid complement member (60) are formed with barbs (109, 111, 113, 115, 117, 119) which engage inner surfaces of the tops of the tubes (T1 to T6).

6. A battery plate according to Claim 5, characterised in that the depending parts (66 to 74) of the grid complement member (60) are resilient and are compressively secured within the tubes (T1 to T6) to exert tension thereagainst.

7. A battery plate according to Claim 4, characterised in that the grid complement member (60) has inwardly projecting ribs (62e, 62f) which engage with the spines (53 to 58) where they join the top bar (50).

8. A method of manufacturing a positive plate according to Claim 1, wherein the parts are first-assembled to constitute an unformed positive plate (274), the unformed positive plate (274) is immersed in an acid bath (272), and the plate is formed electrochemically to produce a formed positive plate, characterised by, after said forming, removing a part of the grid complement member (60) to uncover a section of the post means (52) which is free from lead oxide coating which may result from the said electrochemical formation.

9. A method of manufacturing a positive plate according to Claim 1, wherein the parts are first assembled to constitute an unformed positive plate (274), characterised by immersing the unformed positive plate (274) together with an unformed negative plate (276) in a common acid bath (272), supplying an electrical current to provide electrochemical formation of the plates, and substantially inhibiting transfer of antimony in any appreciable amount from enclosed surfaces of the grid structure which is formed of lead alloy having an antimony content to the active material of the negative plate.

## Revendications

1. Plaque positive pour une batterie au plomb, du type ayant une structure à grille (62) comprenant une barre supérieure (50), des moyens à broches (52) et des colonnes espacées (53 à 58) collectrices du courant reliées à la barre supérieure, des tubes (T1 à T6) disposés de manière à placer de la matière active (M1) autour des colonnes (53 à 58), et un élément de complément de grille (60) en matière chimiquement inerte, imperméable à l'électrolyte, qui entoure la barre supérieure (50) et les moyens à broches (52) et qui comporte des parties descendantes (66 à 74) qui s'enclenchent avec les tubes (T1 à T6), caractérisée en ce que les parties descendantes (66 à 74) de l'élément de complément de grille sont disposées pour s'ajuster étroitement autour de la barre supérieure (50) et pour recouvrir étroitement toutes les surfaces de la structure à grille (62) qui ne sont pas en contact avec la matière active (M1), et les parties descendantes (66 à 74) comprennent des éléments d'insertion (80, 82, 84, 86, 88, 90, 92, 94, 96, 98, 100, 102) dans des tubes qui s'emboîtent dans les extrémités supérieures des tubes (T1 à T6) afin de verrouiller les tubes (T1 à T6) avec la structure à grille (62), lesquels éléments d'insertion (80, 82, 84, 86, 88, 90, 92, 94, 96, 98, 100, 102) dans les tubes referment de la matière active (M1) qui est en contact avec les parties supérieures des colonnes (53 à 58), établissant ainsi des trajets allongés pour le courant vers ces parties des colonnes.

2. Plaque de batterie selon la revendication 1, caractérisée en ce que l'élément de complément de grille (60) est réalisé en une matière élastique et est plié autour de la barre supérieure.

3. Plaque de batterie selon la revendication 1 ou la revendication 2, caractérisée en ce que les éléments d'insertion (80, 82, 84, 86, 88, 90, 92, 94, 96, 98, 100, 102) dans les tubes, qui renferment de la matière active (M1) en contact avec les parties supérieures des colonnes (53 à 58), établissent des trajets allongés pour la diffusion des ions sulfate autour desdites parties de colonnes.

4. Plaque de batterie selon la revendication 3, caractérisée en ce que les parties descendantes (66 à 74) de l'élément de complément de grille (60) comportent des portions (62g, 62h) qui s'enclenchent avec les colonnes (53 à 58) où elles sont reliées à la barre supérieure (50).

5. Plaque de batterie selon la revendication 3 ou la revendication 4, caractérisée en ce que les parties descendantes (66 à 74) de l'élément de complément de grille (60) comportent des arêtes (109, 111, 113, 115, 117, 119) qui portent contre les surfaces intérieures des extrémités supérieures des tubes (T1 à T6).

6. Plaque de batterie selon la revendication 5, caractérisée en ce que les parties descendantes (66 à 74) de l'élément de complément de grille (60) sont élastiques et fixées par compression à l'intérieur des tubes (T1 à T6) pour exercer contre eux une tension.

7. Plaque de batterie selon la revendication 4, caractérisée en ce que l'élément de complément de grille (60) comporte des nervures (62e, 62f) faisant saillie vers l'intérieur qui s'enclenchent avec les colonnes (53 à 58) où elles sont jointes à la barre supérieure (50).

8. Procédé de fabrication d'une plaque positive selon la revendication 1, dans lequel les pièces sont d'abord assemblées pour constituer une plaque positive non formée (274), la plaque positive non formée (274) est immergée dans un bain d'acide (272) et la plaque est formée électrochimiquement pour produire une plaque positive formée, caractérisé en ce qu'il consiste, après ladite formation, à retirer une partie de l'élément de complément de grille (60) pour découvrir une section des moyens à broches (52) qui ne présente pas de revêtement d'oxyde de plomb pouvant résulter de ladite formation électrochimique.

9. Procédé de fabrication d'une plaque positive selon la revendication 1, dans lequel les pièces sont d'abord assemblées pour constituer une plaque positive non formée (274), caractérisé en ce qu'il consiste à immerger la plaque positive non formée (274) avec une plaque négative non formée (276) dans un bain d'acide commun (272), à faire circuler un courant électrique pour produire une formation électrochemique des plaques, et à inhiber sensiblement le transfer de l'antimoine en toute quantité appréciable, des surfaces renfermées de la structure à grille qui est formée en alliage de plomb ayant une teneur en antimoine, vers la matière active de la plaque négative.

**Patentansprüche**

1. Positive Platte für eine Bleibatterie von der Art, die eine Gitterstruktur (62) mit einem oberen Verbindungsstab (50), einem Anschlußteil (52) und im Abstand voneinander angeordneten Stromsammel-Gitterstäben (53—58) enthält, die mit dem oberen Verbindungsstab verbunden sind, mit Hülsen (T1—T6), die zum Anbringen einer aktiven Masse (M1) rund um die Gitterstäbe (53—58) vorgesehen sind, und mit einem Gitterzusatzteil (60) aus einem chemisch indifferenten und für den Elektrolyten undurchlässigen Material, der den oberen Verbindungsstab (50) und das Anschlußstück (52) umschließt und nach unten verlaufende Teile (66—74) aufweist, die in die Hülsen (T1—T6) eingreifen, dadurch gekennzeichnet, daß die nach unten verlaufenden Teile (66—74) des Gitterzusatzteils derart ausgelegt sind, daß sie sich fest um den oberen Verbindungsstab (50) anpassen und alle Oberflächen der Gitterstruktur (62) dicht abschließen, die nicht in Berührung mit der aktiven Masse (M1) stehen, und daß die nach unten verlaufenden Teile (66—74) Hülseneinsatzstücke (80, 82, 84, 86, 88, 90, 92, 94, 96, 98, 100, 102) umfassen, die in die oberen Enden der Hülsen (T1—T6) dergestalt eingreifen, daß sie die Hülsen (T1—T6) und die Gitterstruktur (62) miteinander verblocken, wobei die Hülseneinsatzteile (80, 82, 84, 86, 88, 90, 92, 94, 96, 98, 100, 102) eine aktive Masse (M1) umschließen, die in Berührung mit den oberen Teilen der Gitterstäbe (53—58) steht und dadurch einen verlängerten Stromweg für diese Teile der Gitterstäbe darstellt.

2. Batterieplatte nach Anspruch 1, dadurch gekennzeichnet, daß der Gitterzusatzteil (60) aus einem elastischen Material hergestellt und um den oberen Verbindungsstab gelegt ist.

3. Batterieplatte nach Anspruch 1 oder Anspruch 2, dadurch gekennzeichnet, daß die Hülseneinsatzteile (80, 82, 84, 86, 88, 90, 92, 94, 96, 98, 100, 102), welche die aktive Masse (M1) umschließen, die mit den oberen Teilen der Gitterstäbe (53—58) in Berührung ist, verlängerte Wege für die Diffusion von Sulfationen um diese Teile der Gitterstäbe ausbilden.

4. Batterieplatte nach Anspruch 3, dadurch gekennzeichnet, daß die nach unten verlaufenden Teile (66—74) des Gitterzusatzteiles (60) Abschnitte (62g, 62h) aufweisen, die sich gegen die Gitterstäbe (53—58) dort anlegen, wo sie mit dem oberen Verbindungsstab (50) verbunden sind.

5. Batterieplatte nach Anspruch 3 oder Anspruch 4, dadurch gekennzeichnet, daß die nach unten verlaufenden Teile (66—74) des Gitterzustazteils (60) mit Widerhaken (109, 111,

113, 115, 117, 119) ausgebildet sind, die sich gegen die Innenflächen der oberen Enden der Hülsen (T1—T6) anlegen.

6. Batterieplatte nach Anspruch 5, dadurch gekennzeichnet, daß die nach unten verlaufenden Teile (66—74) des Gitterzusatzteils (60) elastisch sind und unter Zusammenpressung in den Hülsen (T1—T6) festgesetzt sind, um einen Druck gegen dieselben auszuüben.

7. Batterieplate nach Anspruch 4, dadurch gekennzeichnet, daß der Gitterzusatzteil (60) nach innen vorstehende Rippen (62e, 62f) aufweist, die sich gegen die Gitterstäbe (54—58) dort anlegen, wo sie mit dem oberen Verbindungsstab (50) verbunden sind.

8. Verfahren zur Herstellung einer positiven Platte nach Anspruch 1, wobei die Teile zunächst zur Ausbildung einer unformierten positiven Platte (274) zusammmengebaut, die unformierte positive Platte (274) in ein Säurebad (272) eingetaucht und die Platte elektrochemisch formiert wird, um eine formierte positive Platte zu erzeugen, dadurch gekennzeichnet, daß nach dem Formieren ein Teil des Gitterzusatzteils (60) entfernt wird, um ein Stück des Anschlußteils (52) bloßzulegen, das frei von Bleioxidüberzug ist, der durch die elektrochemische Formierung entstanden sein könnte.

9. Verfahren zur Herstellung einer positiven Platte nach Anspruch 1, wobei die Teile zunächst zur Ausbildung einer un-formierten positiven Platte (274) zusammengebaut werden, dadurch gekennzeichnet, daß die unformierte positive Platte (274) zusammen mit einer unformierten negativen Platte (276) in ein gemeinsames Säurebad (272) eingetaucht wird, daß ein elektrischer Strom angelegt wird, um die elektrochemische Formierung der Platten zu erzielen, und daß im wesentlichen die Übertragung von Antimon in feststellbaren Mengen von den eingehüllten Flächen der Gitterstruktur, die aus einer Bleilegierung mit einem Antimongehalt gebildet ist, auf die aktive Masse der negativen Platte unterbunden wird.

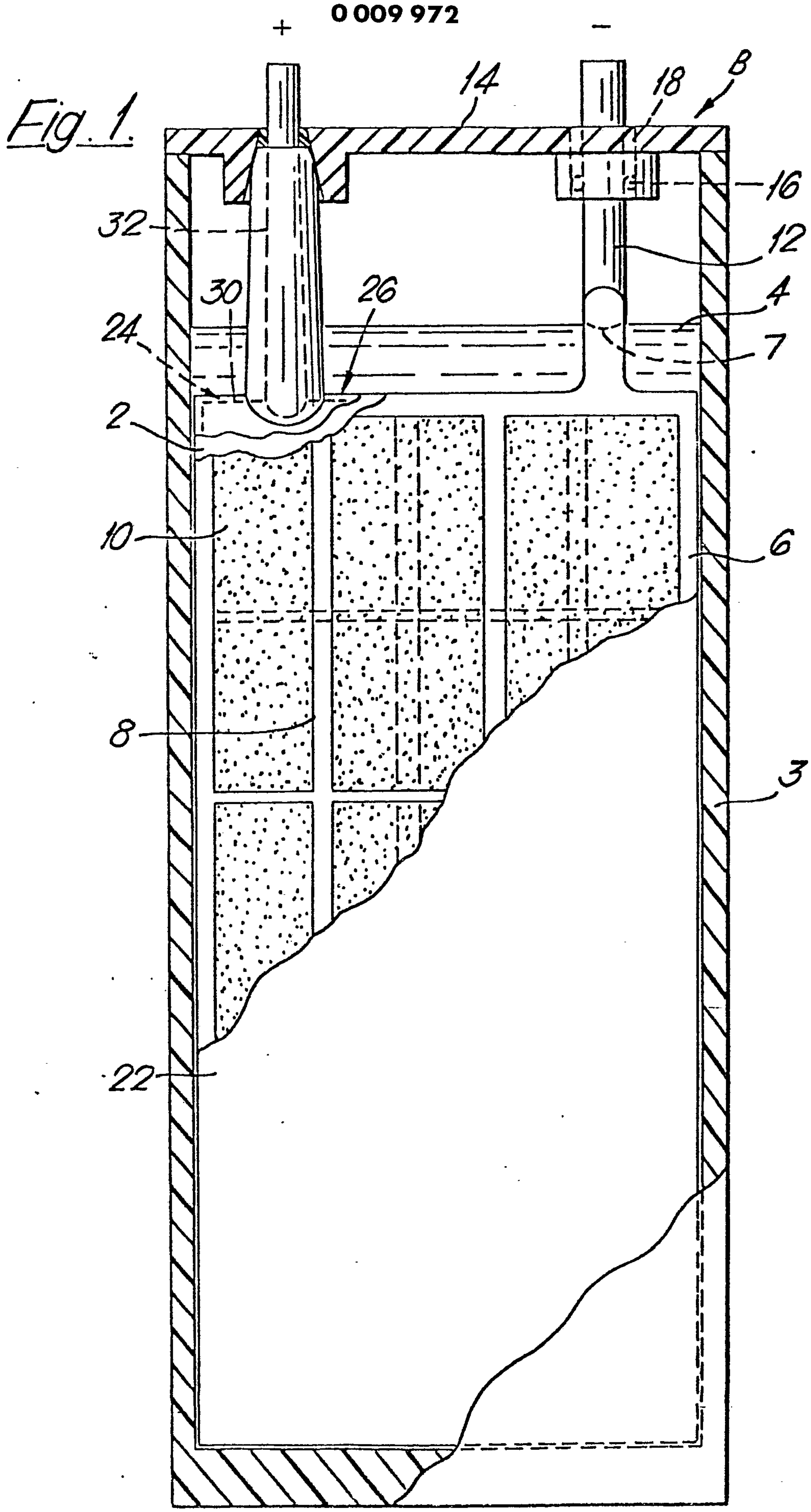
+
−
Fig. 1.
14
18
B
16
32
12
30
26
4
24
7
2
10
6
8
3
22

Fig. 2.

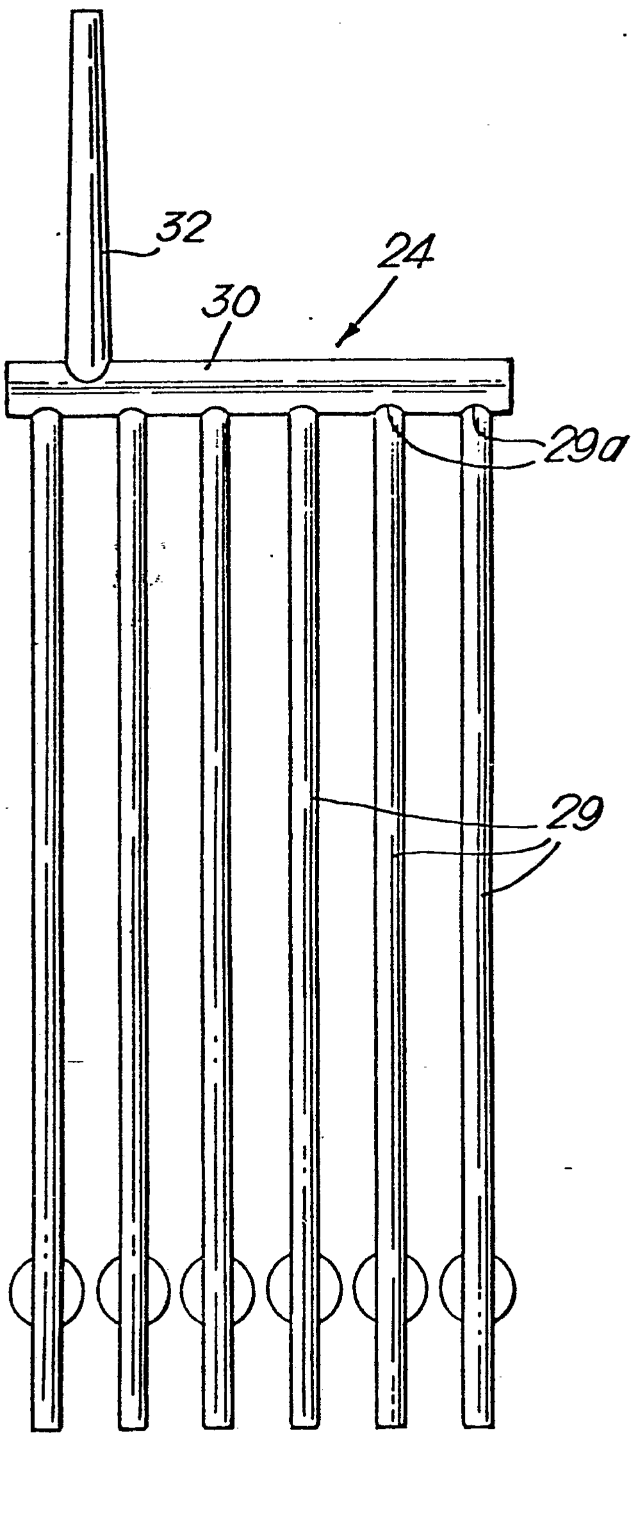


Fig. 3.

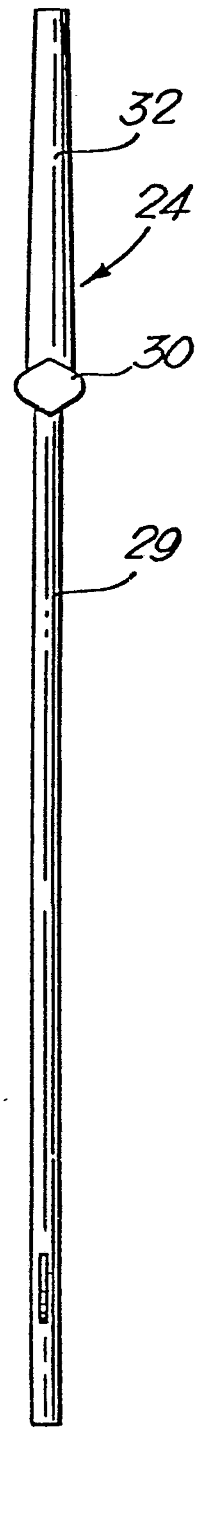

Fig. 4.

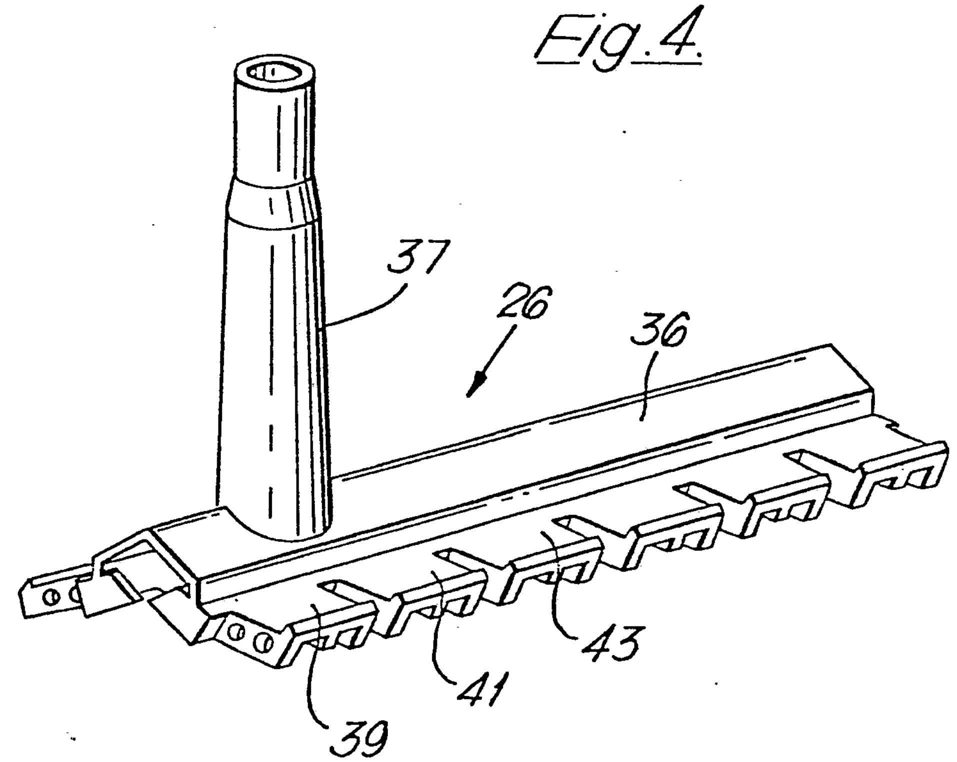


Fig. 5.

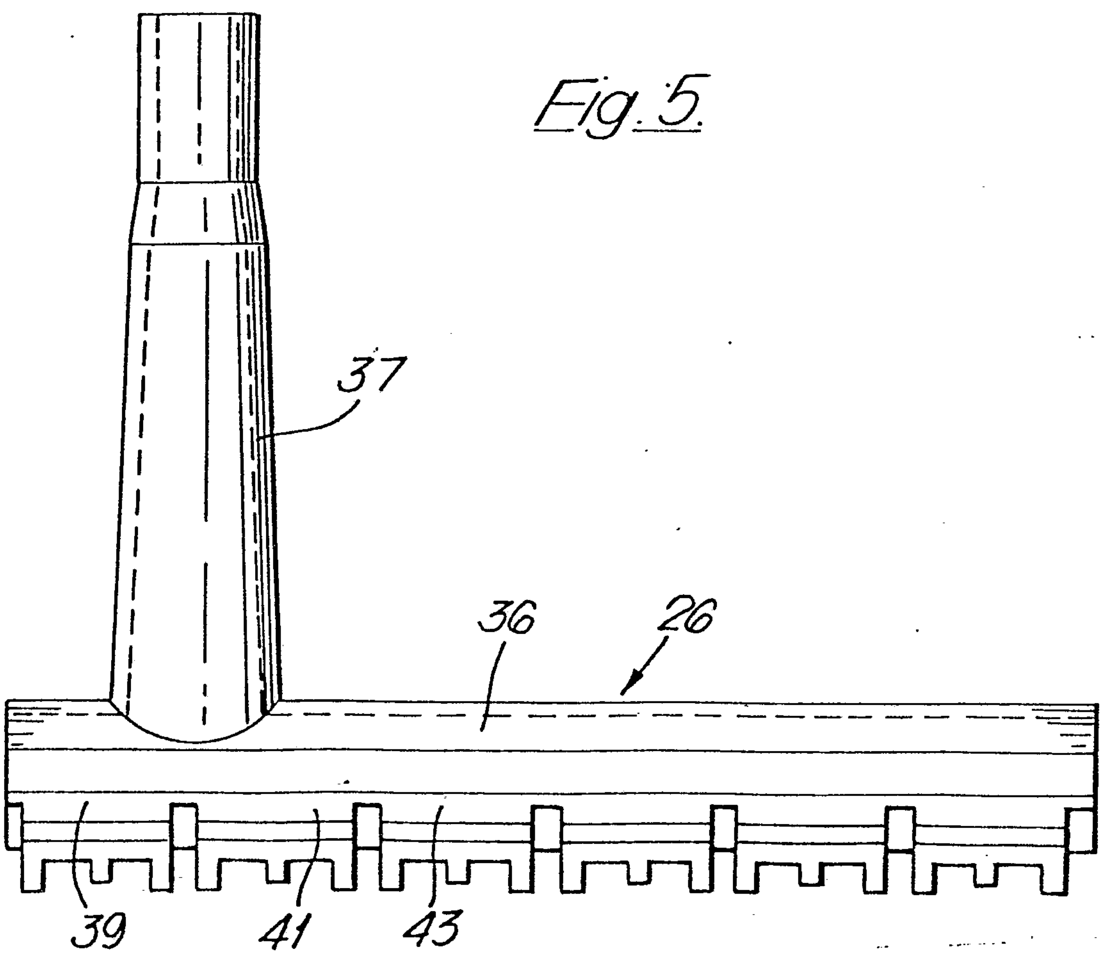

Fig. 6.

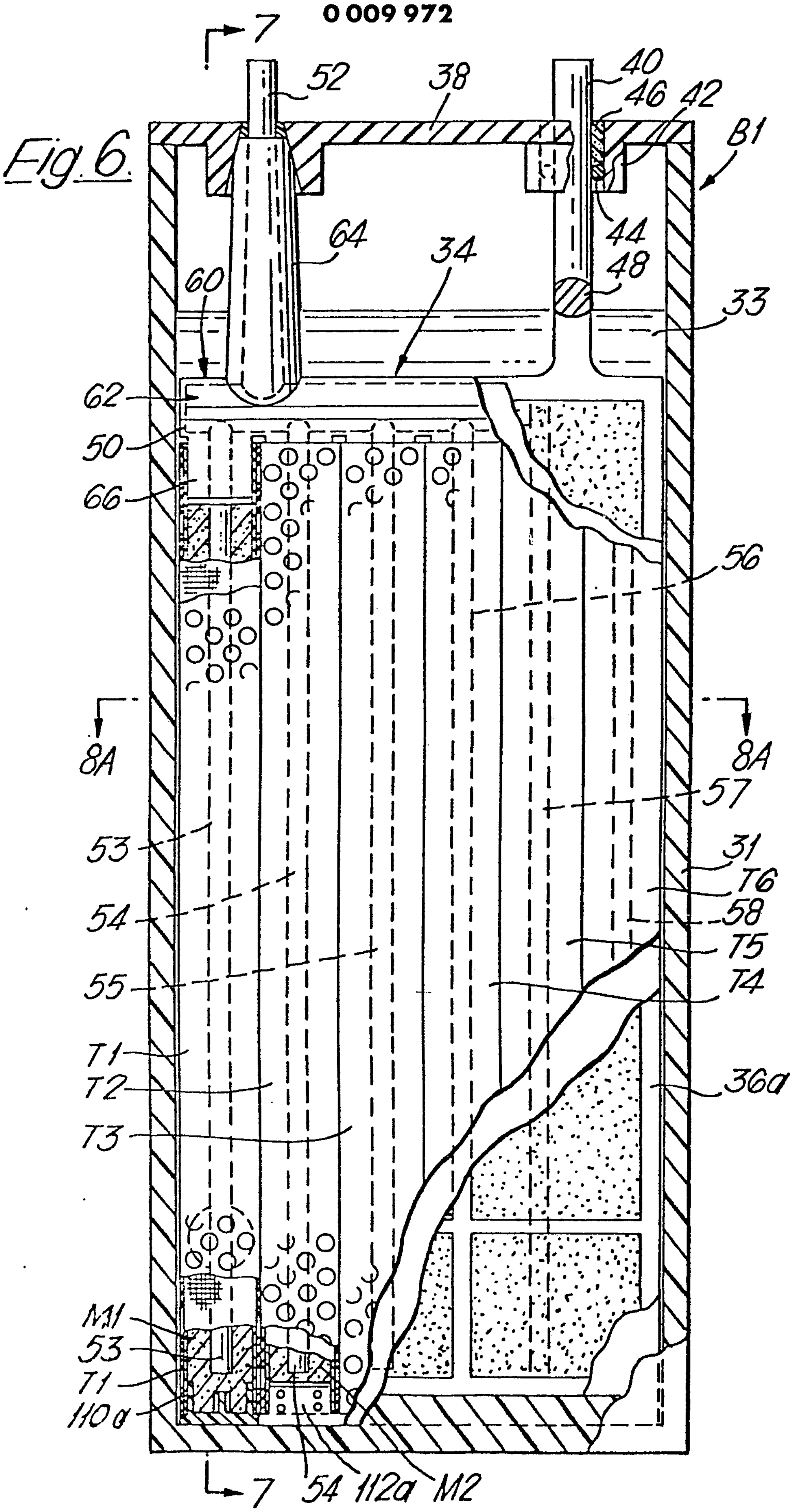
7
52
38
40
46
42
B1
64
34
44
48
60
33
62
50
66
56
8A
8A
57
53
31
T6
54
58
T5
55
T4
T1
T2
36a
T3
M1
53
T1
110a
7
54
112a
M2

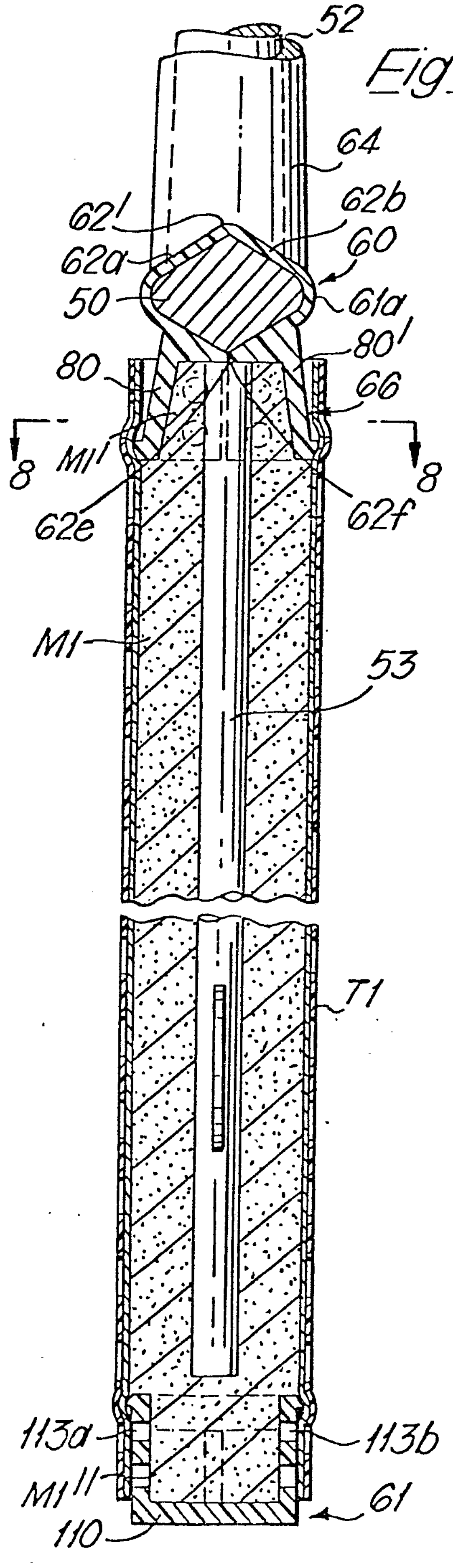
52
64
62'
62b
60
62a
50
61a
80'
80
66
8
M1'
8
62e
62f
M1
53
T1
113a
113b
M1''
61
110

Fig. 7.

Fig. 8.

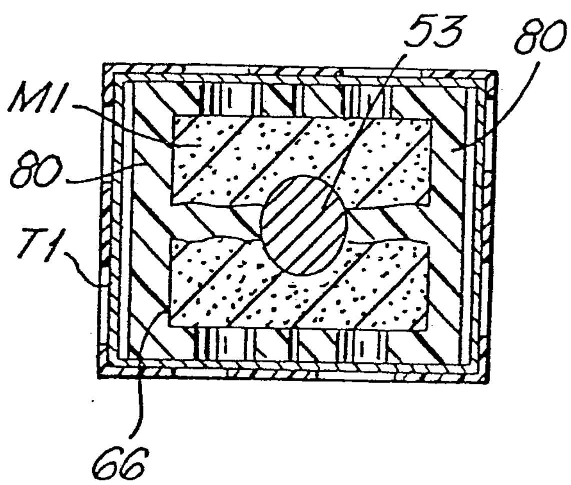
53
80'
M1
80
T1
66

Fig. 8A.

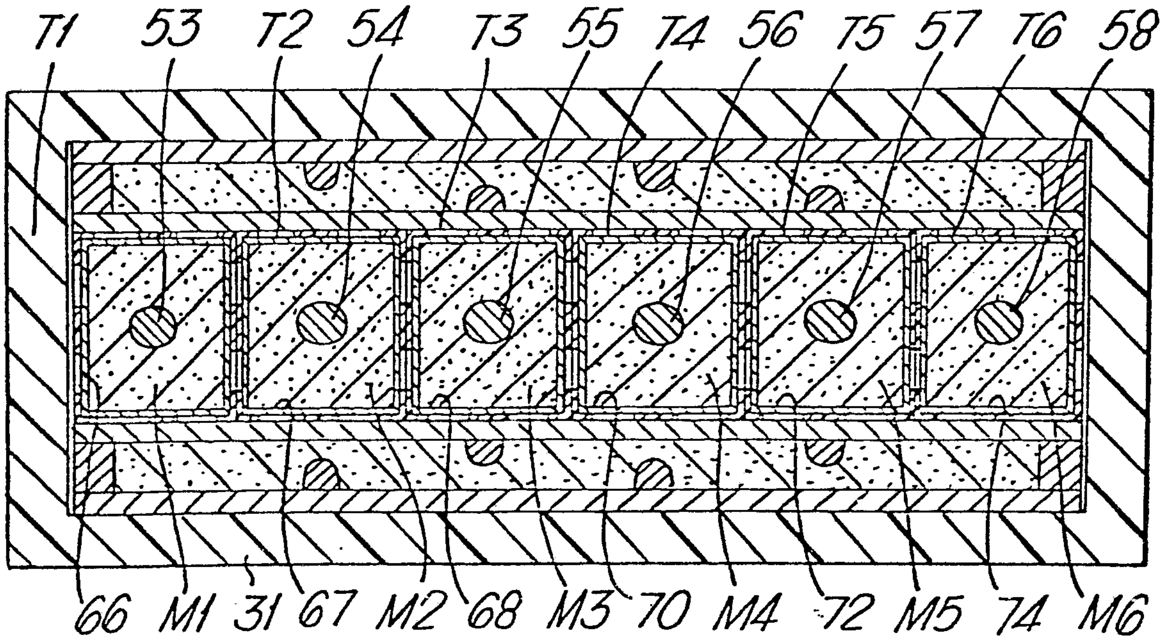


Fig. 11c.

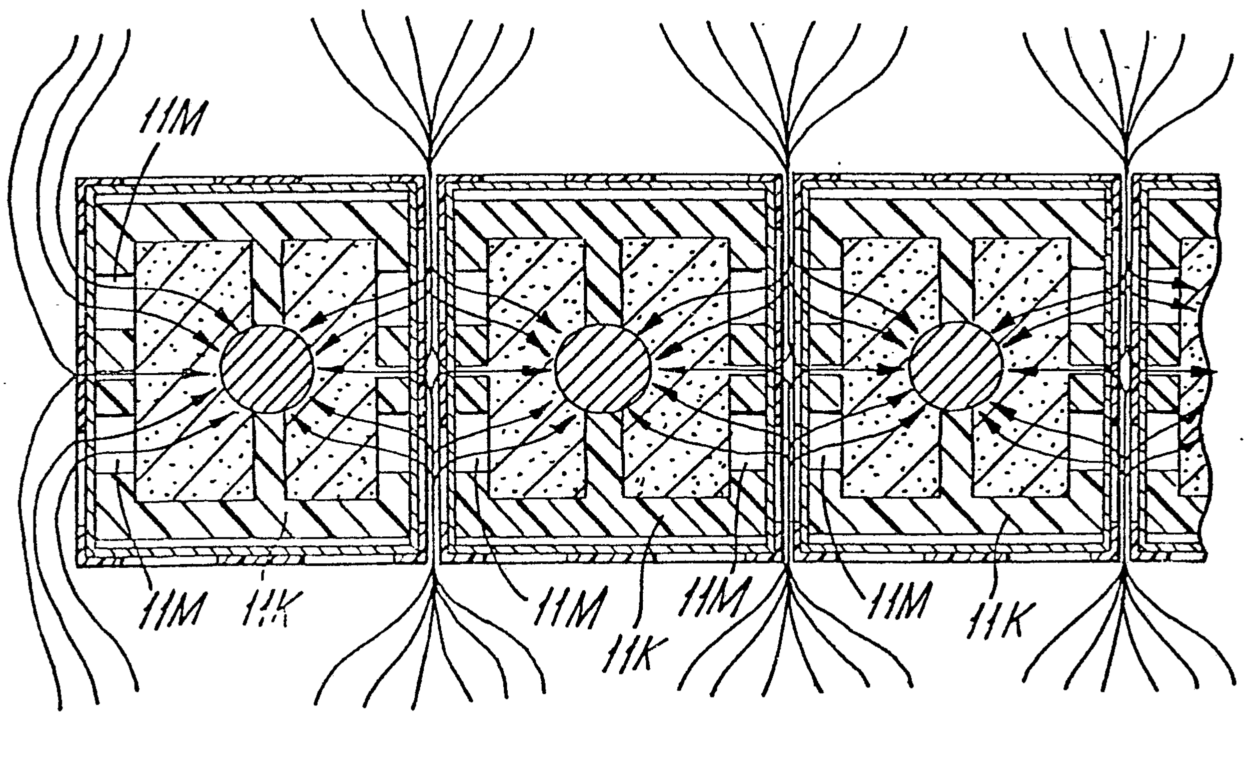

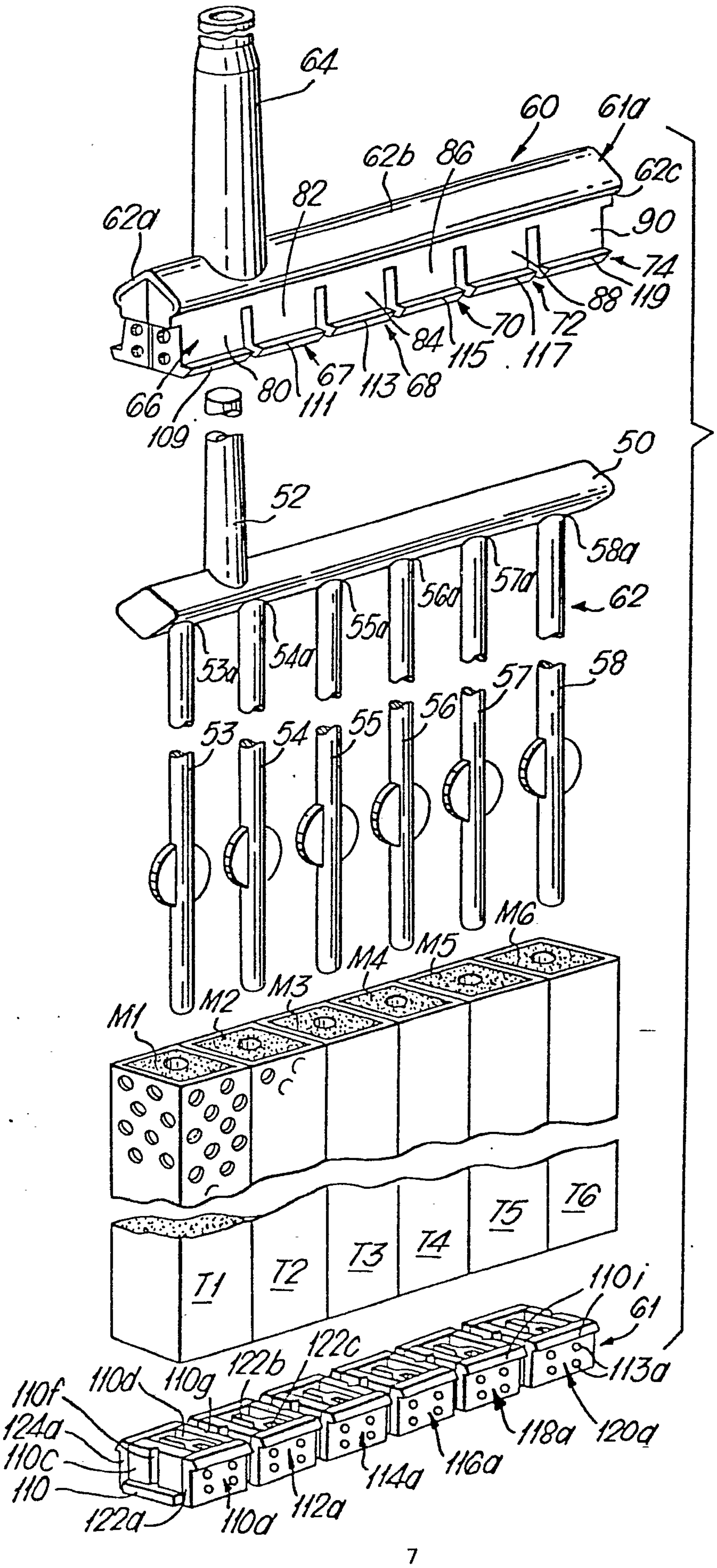
64
60
61a
62b
86
62c
82
62a
90
74
88
119
84
70
72
66
80
67
113
68
115
117
109
111
50
52
58a
56a
57a
62
55a
54a
53a
58
57
56
53
54
55
M1
M2
M3
M4
M5
M6
T1
T2
T3
T4
T5
T6
110i
61
122c
113a
110d
110g
122b
110f
118a
120a
124a
116a
110C
114a
110
112a
122a
110a

Fig. 9

Fig. 9A.

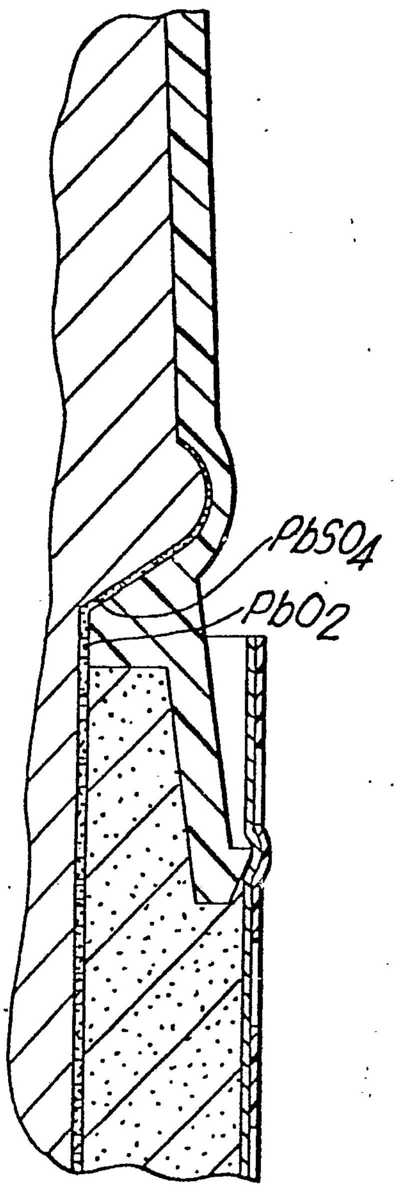

Fig. 10A.

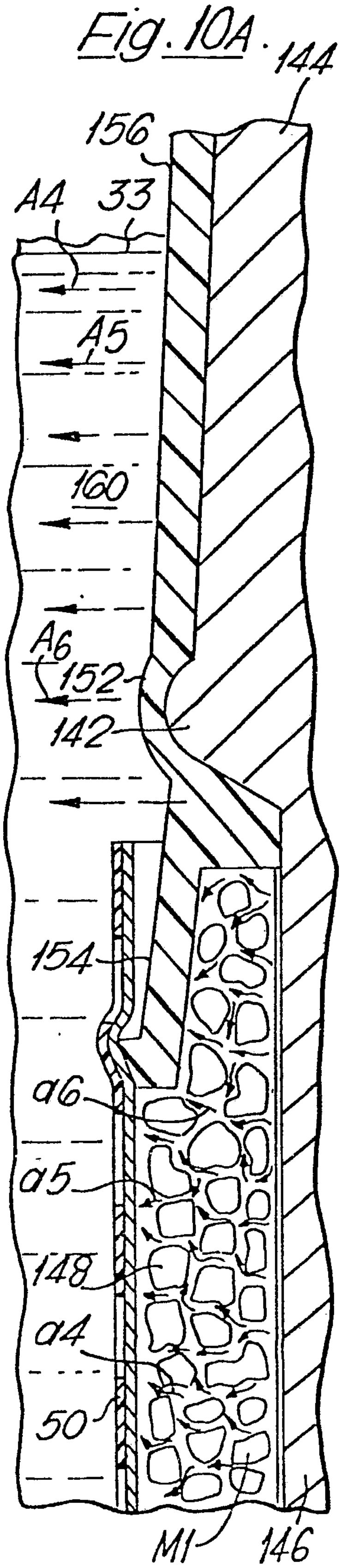


Fig. 10B.

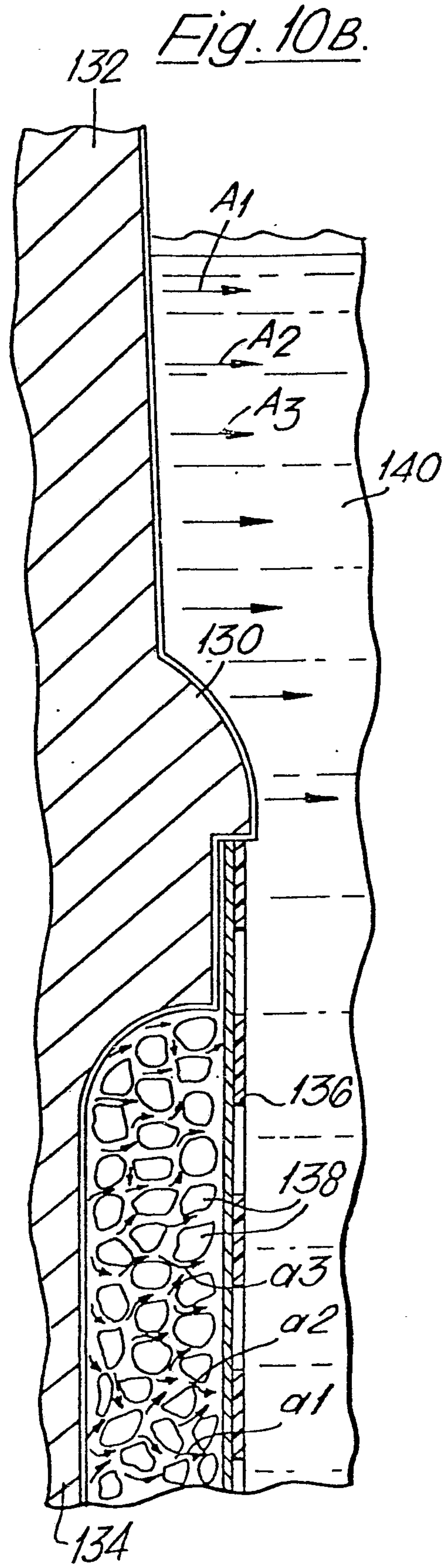

Fig. 11A.

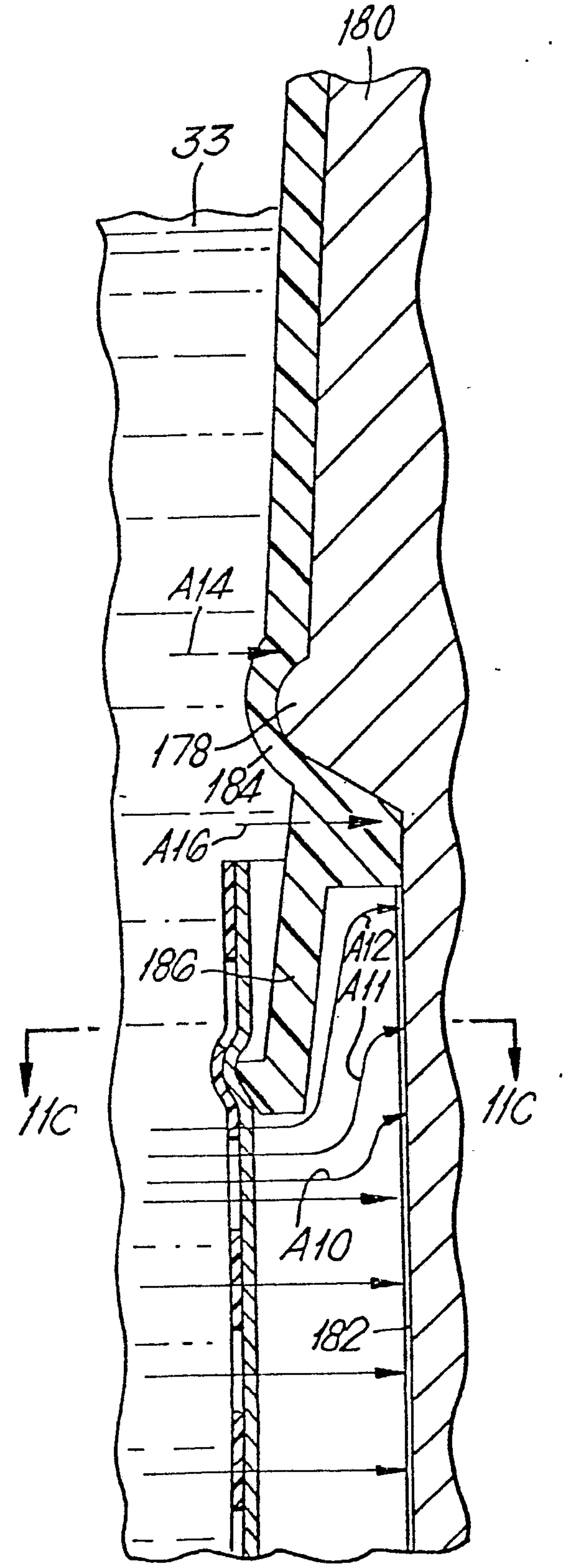


Fig. 11B.

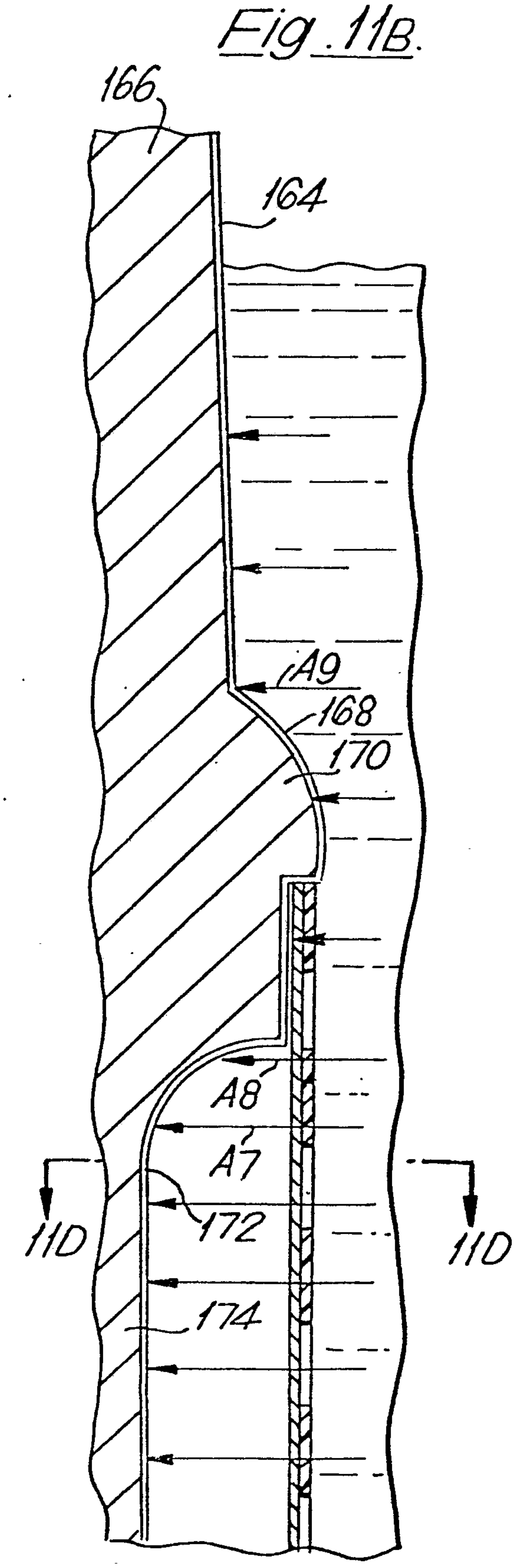

Fig. 11D.

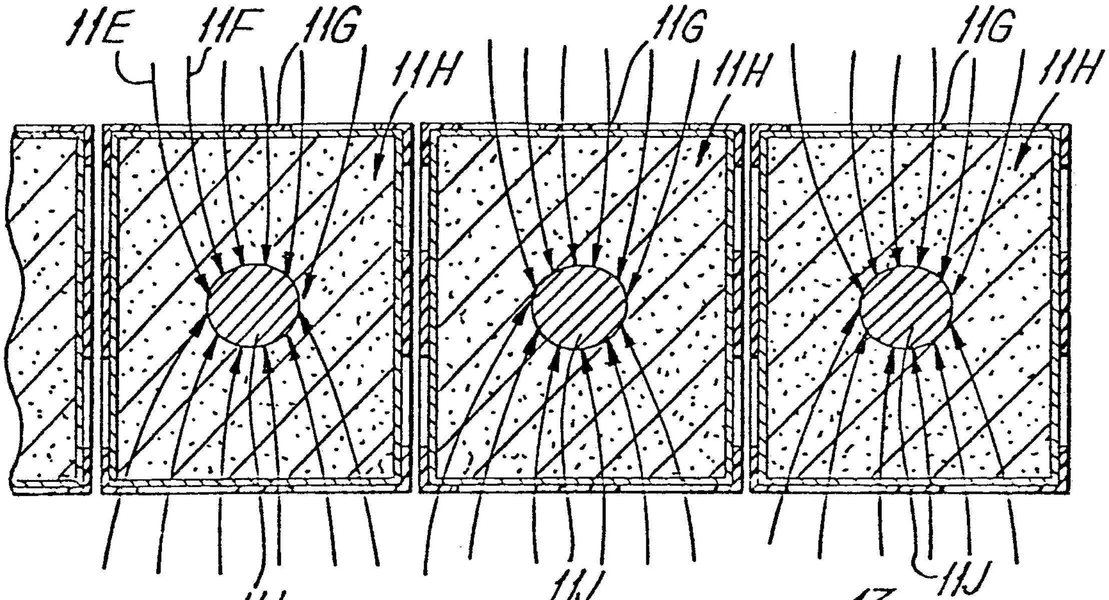


Fig. 12.

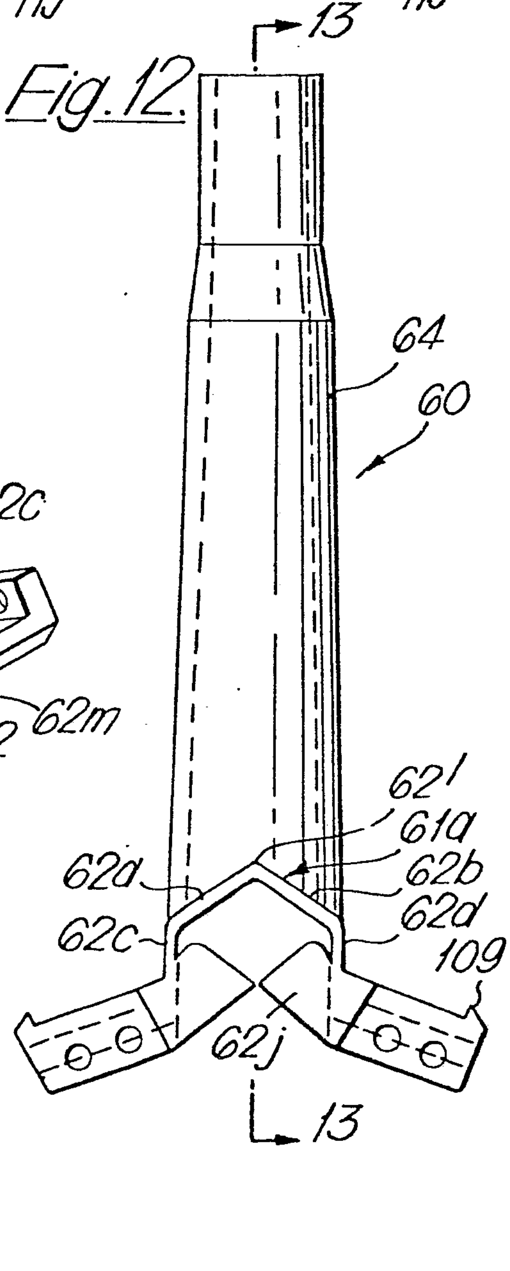


Fig. 12A.

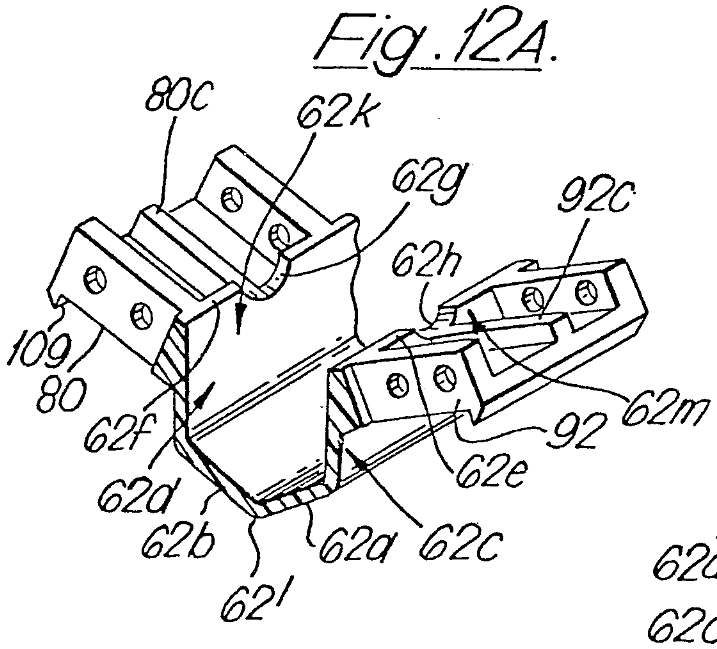

Fig. 13.

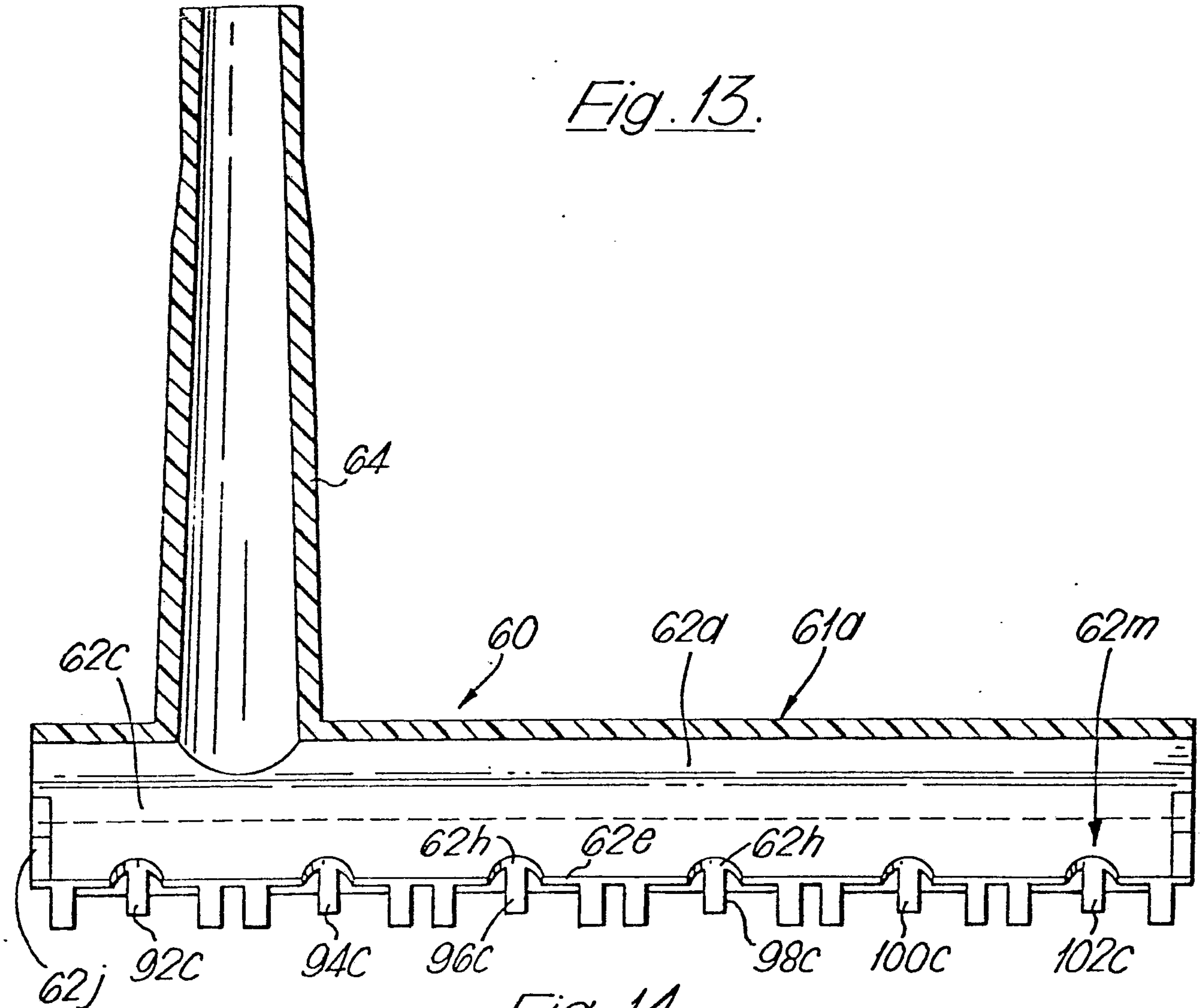

64
60
62a
61a
62m
62c
62h
62e
62h
62j
92c
94c
96c
98c
100c
102c


Fig. 14.

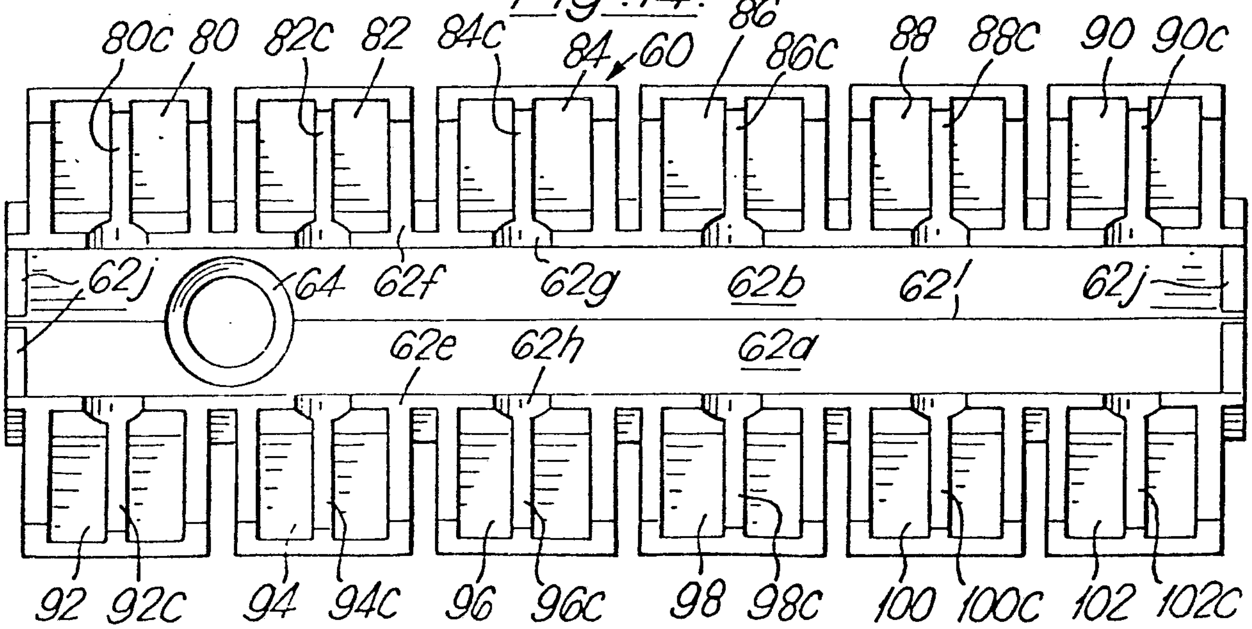

80c 80
82c 82
84c
84 60
86
86c
88 88c
90 90c
62j
64
62f
62g
62b
62l
62j
62e
62h
62a
92 92c
94 94c
96 96c
98 98c
100 100c
102 102c

Fig. 15.

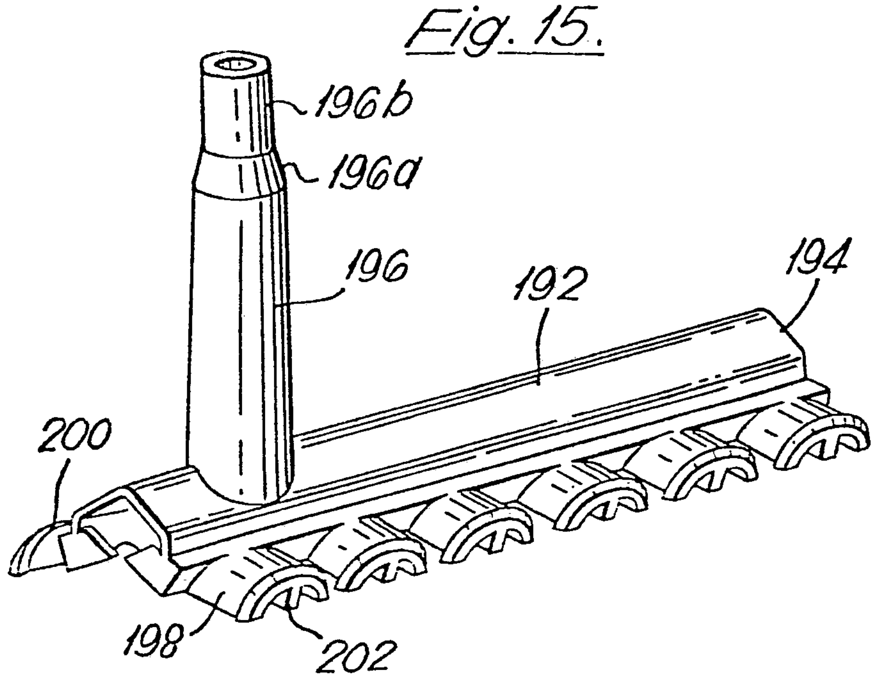


Fig. 17.

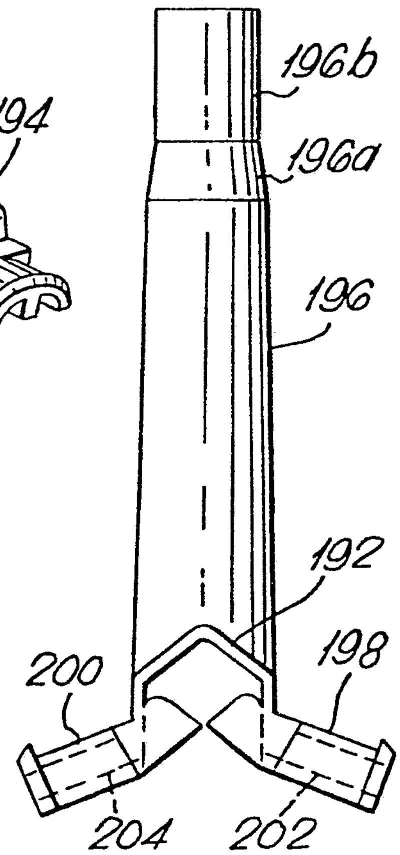


Fig. 16.

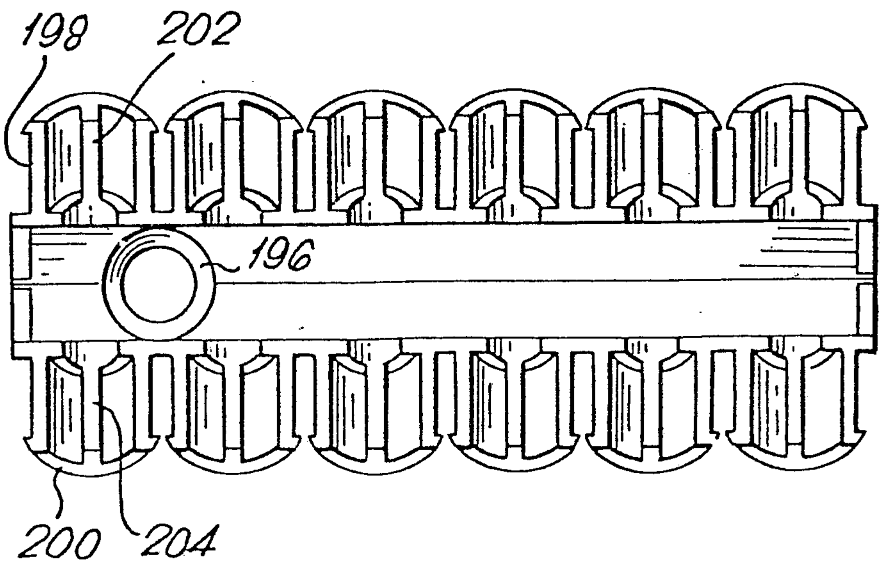

Fig. 18.

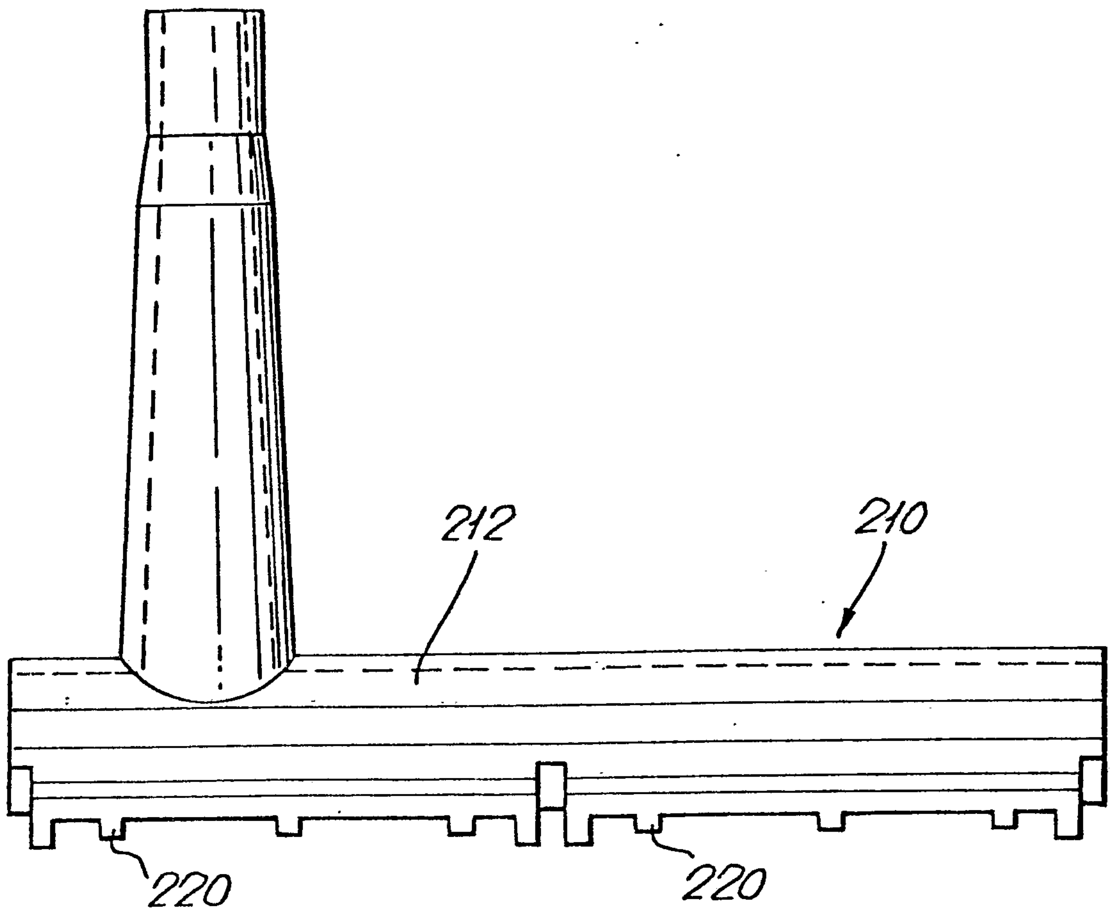


Fig. 19.

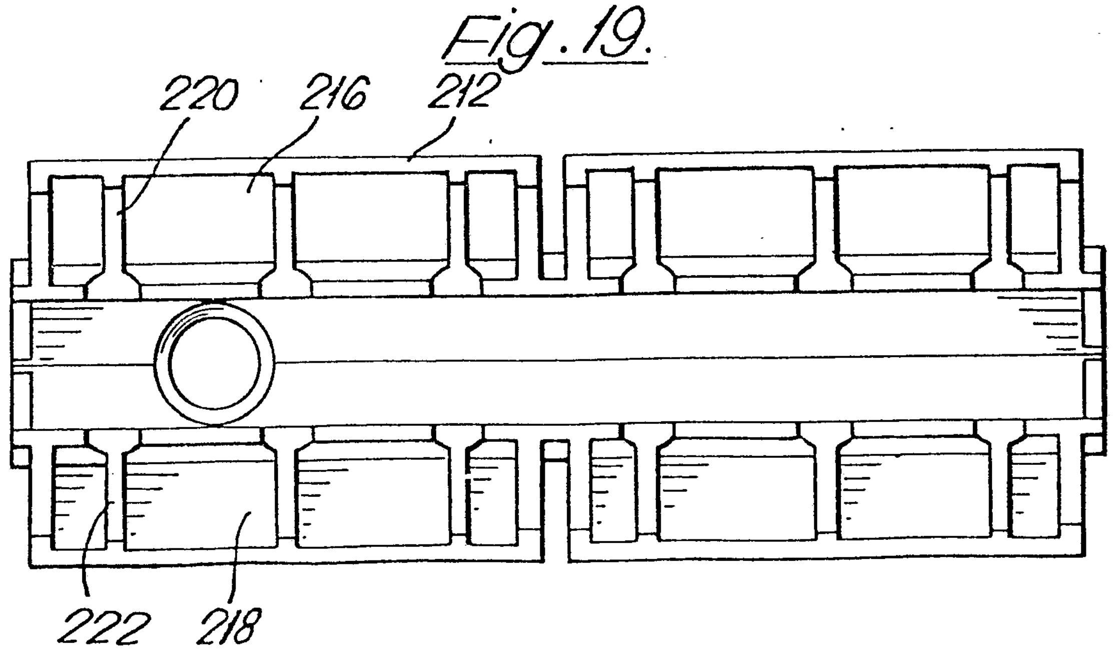

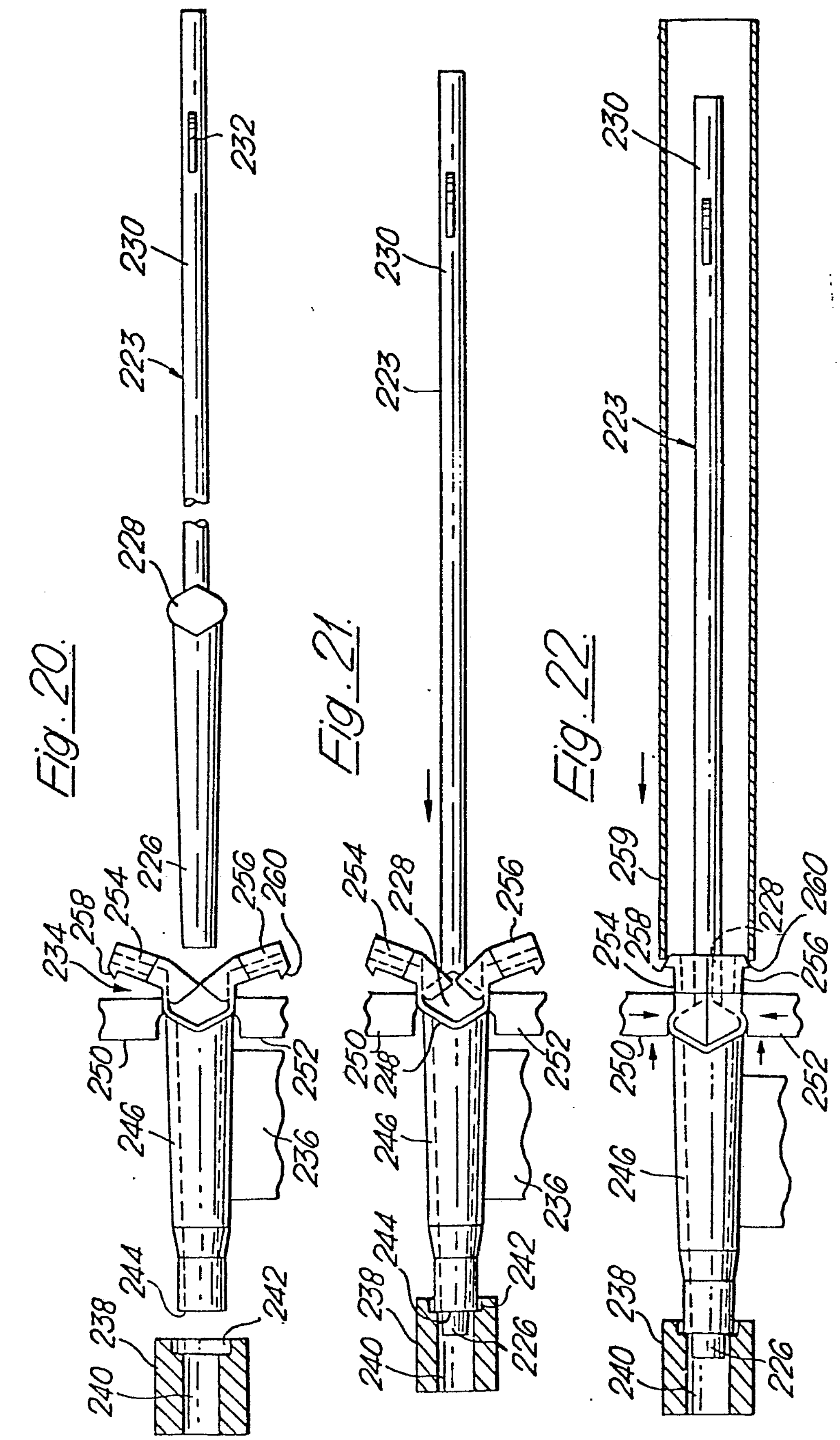
Fig. 20.
Fig. 21.
Fig. 22.
223
226
228
230
232
234
236
238
240
242
244
246
248
250
252
254
256
258
259
260

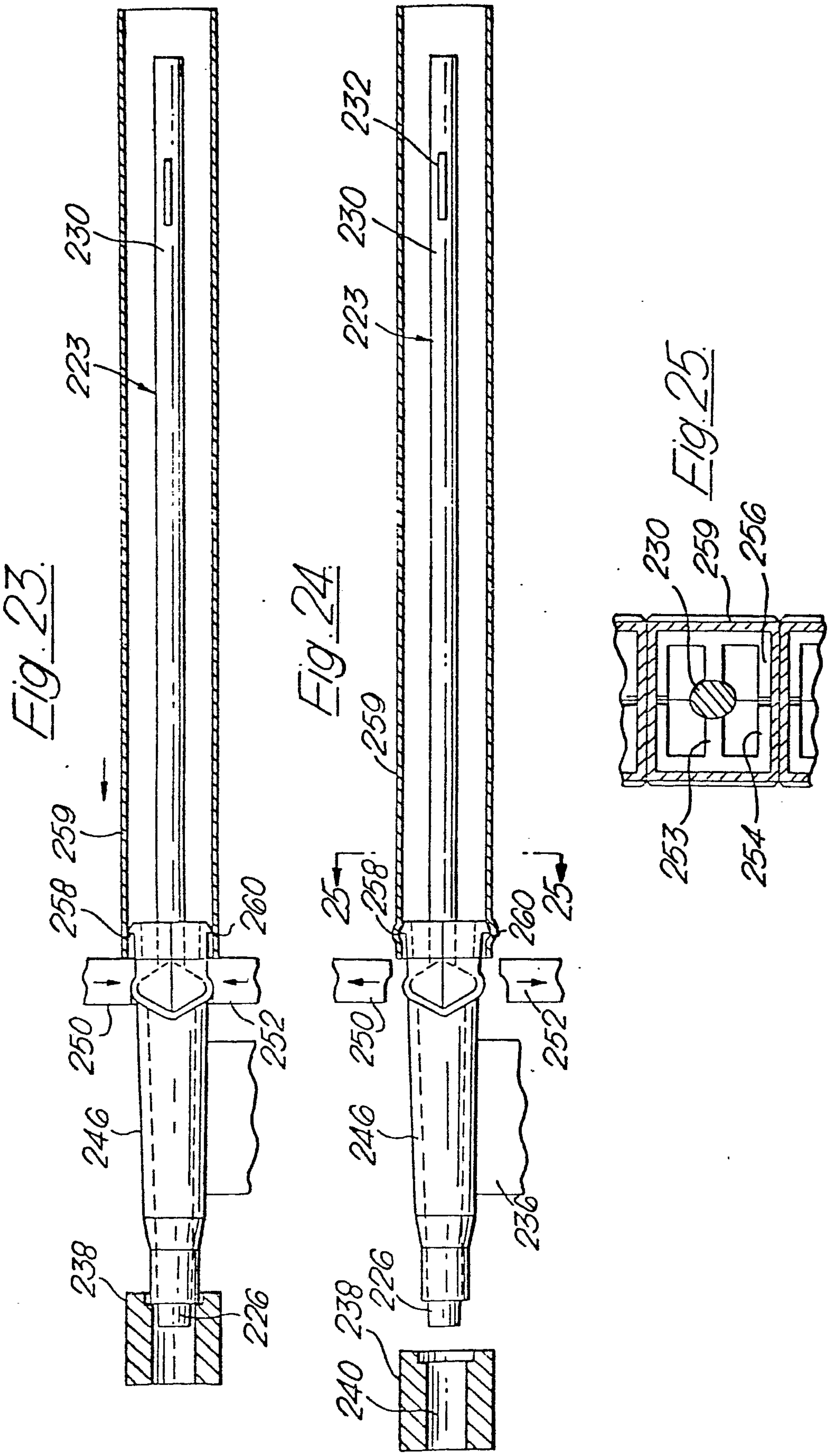


Fig. 23.

Fig. 24.

Fig. 25.

Fig. 26.

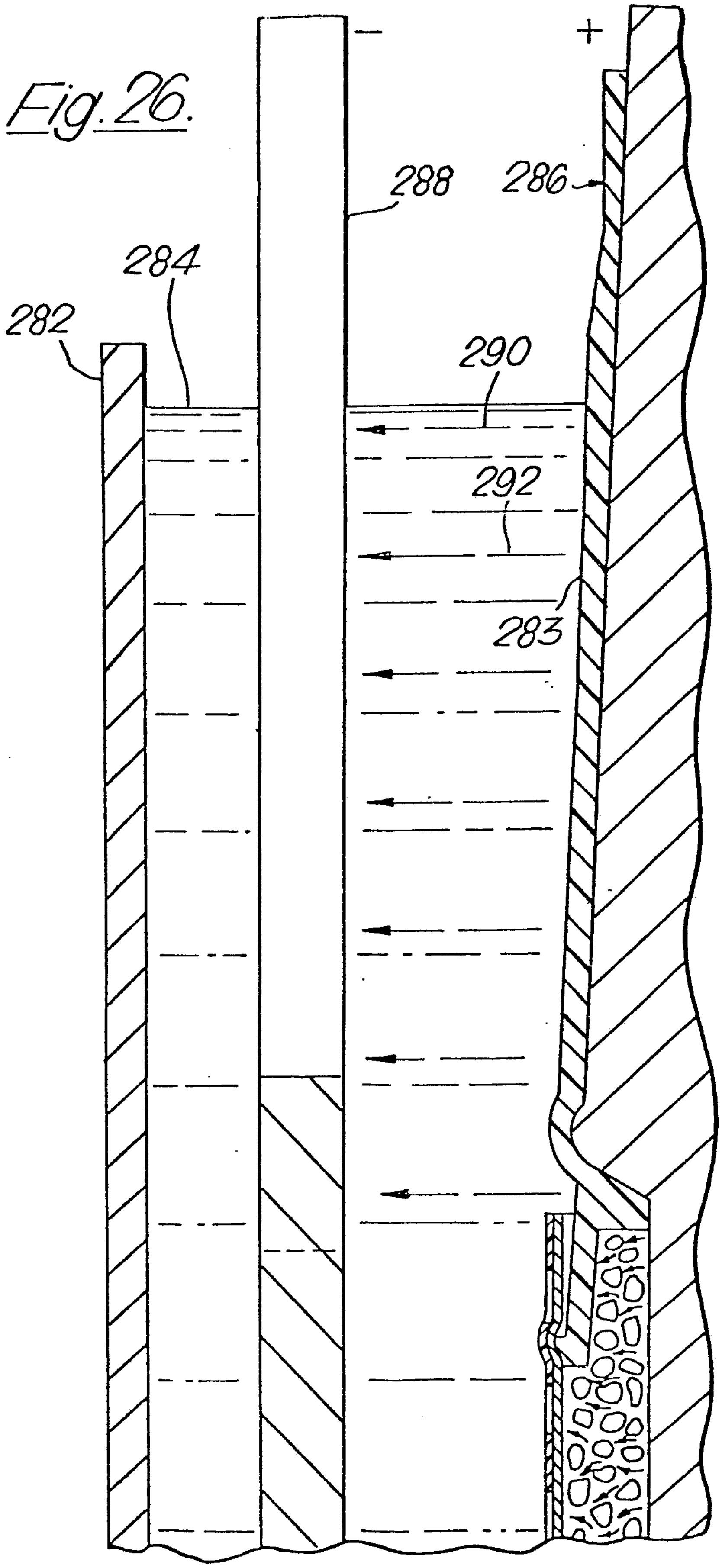

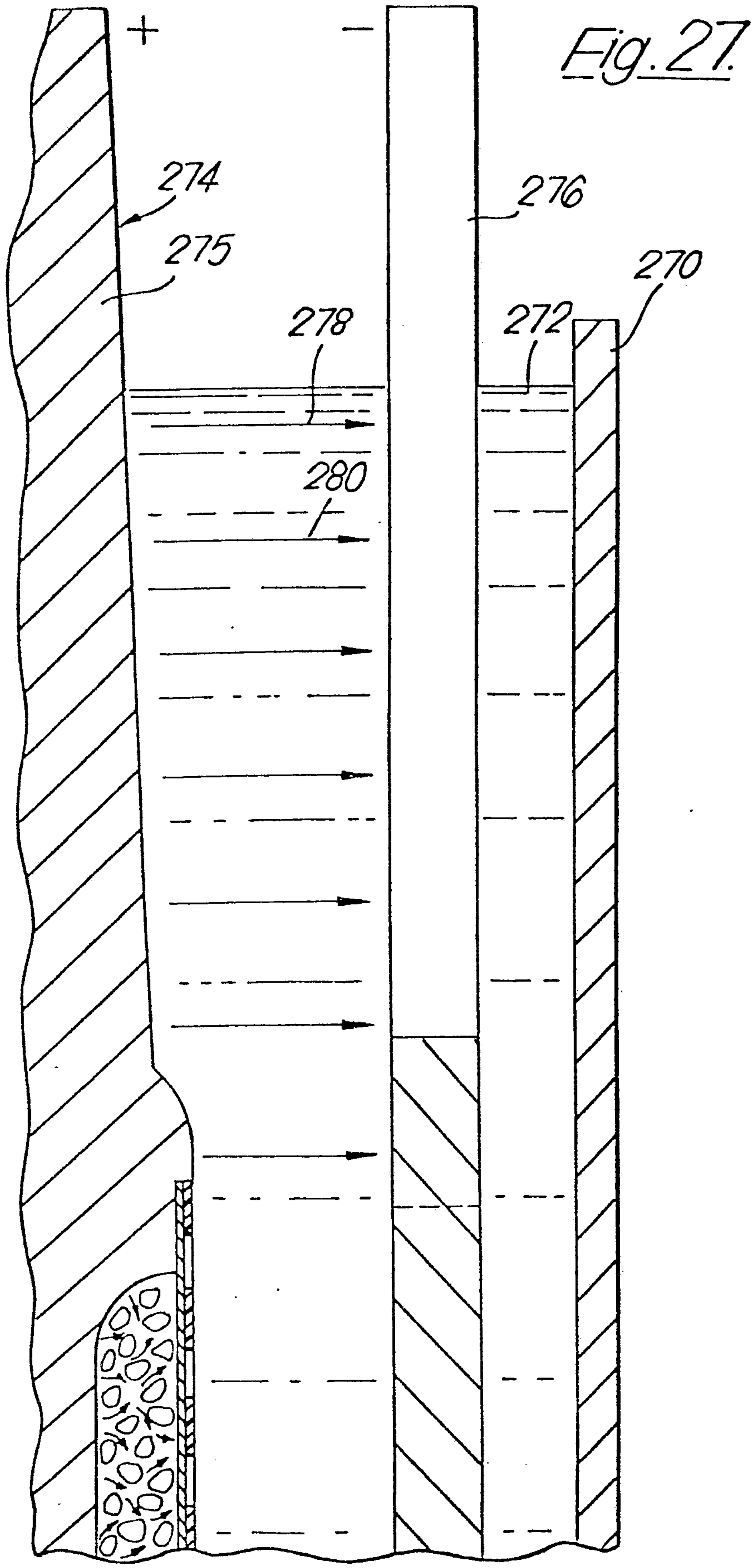


Fig. 27.

Fig. 28.

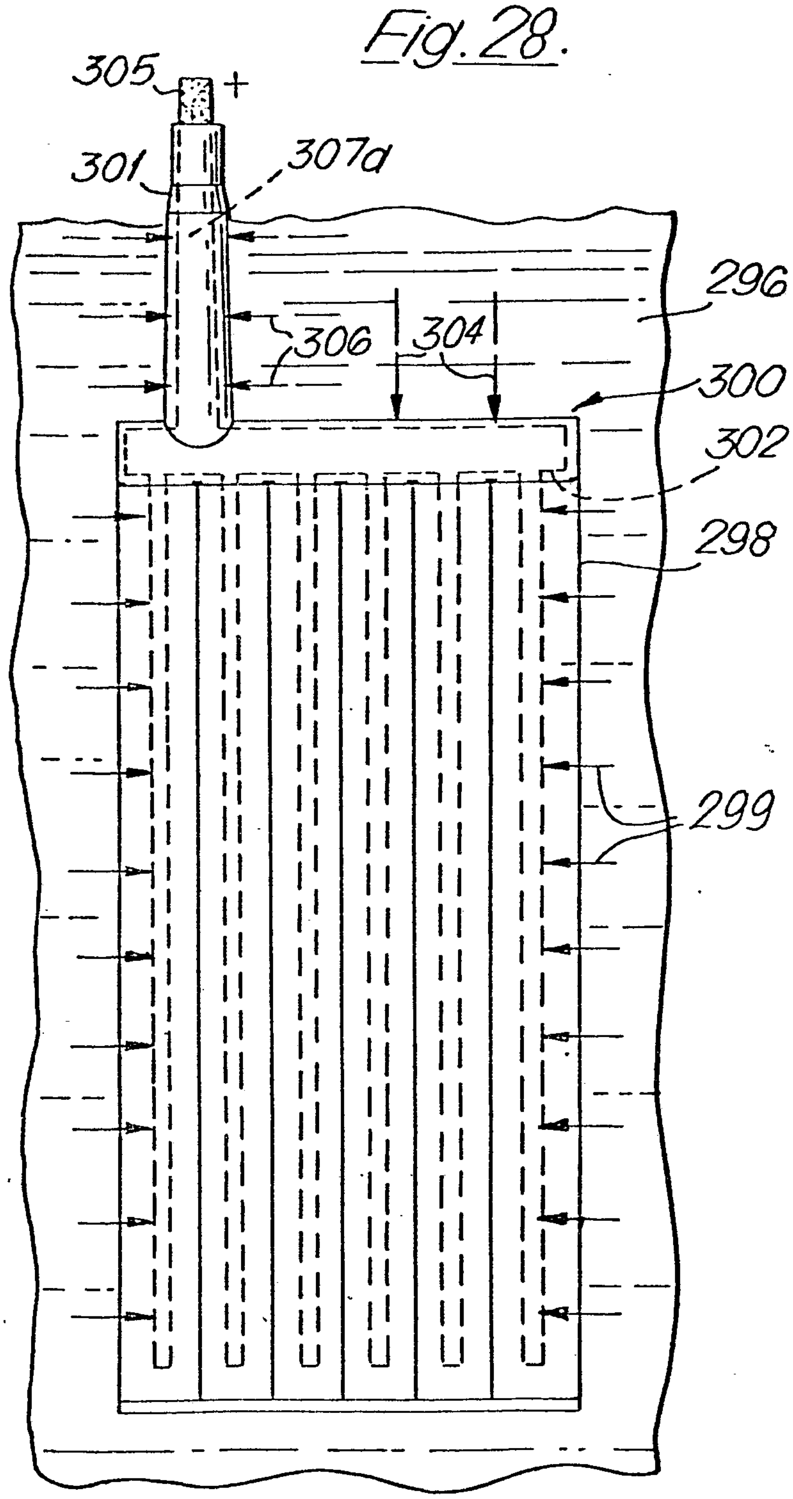
305
+
301
307a
296
306
304
300
302
298
299

Fig. 29.

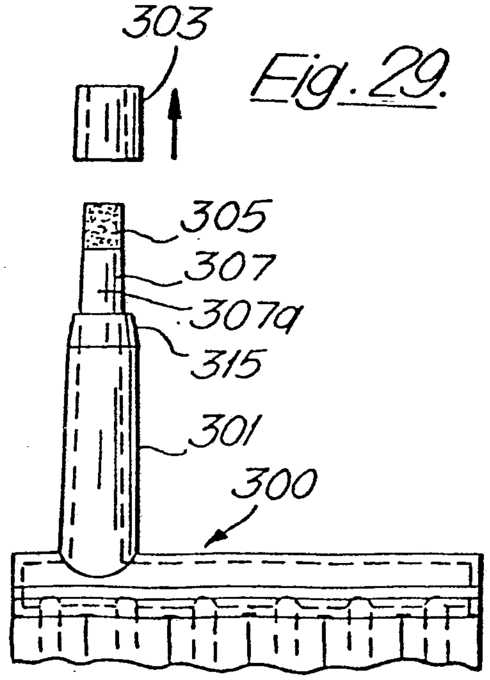
303
305
307
307a
315
301
300

Fig. 31.

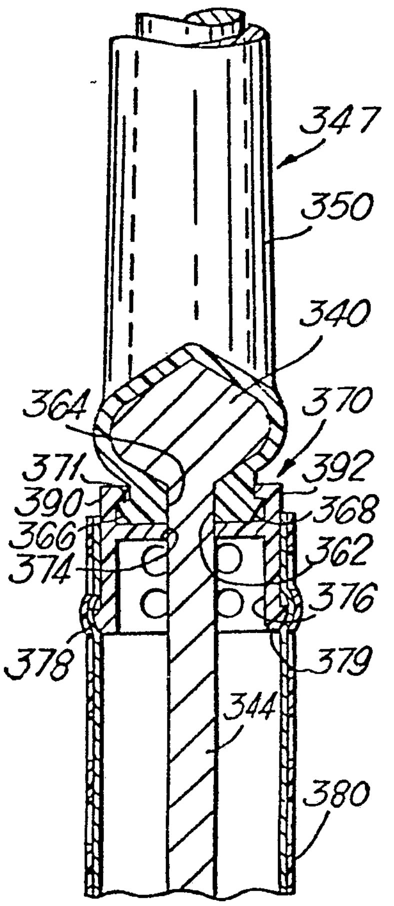
347
350
340
364
370
371
392
390
368
366
362
374
376
378
379
344
380

Fig. 30.

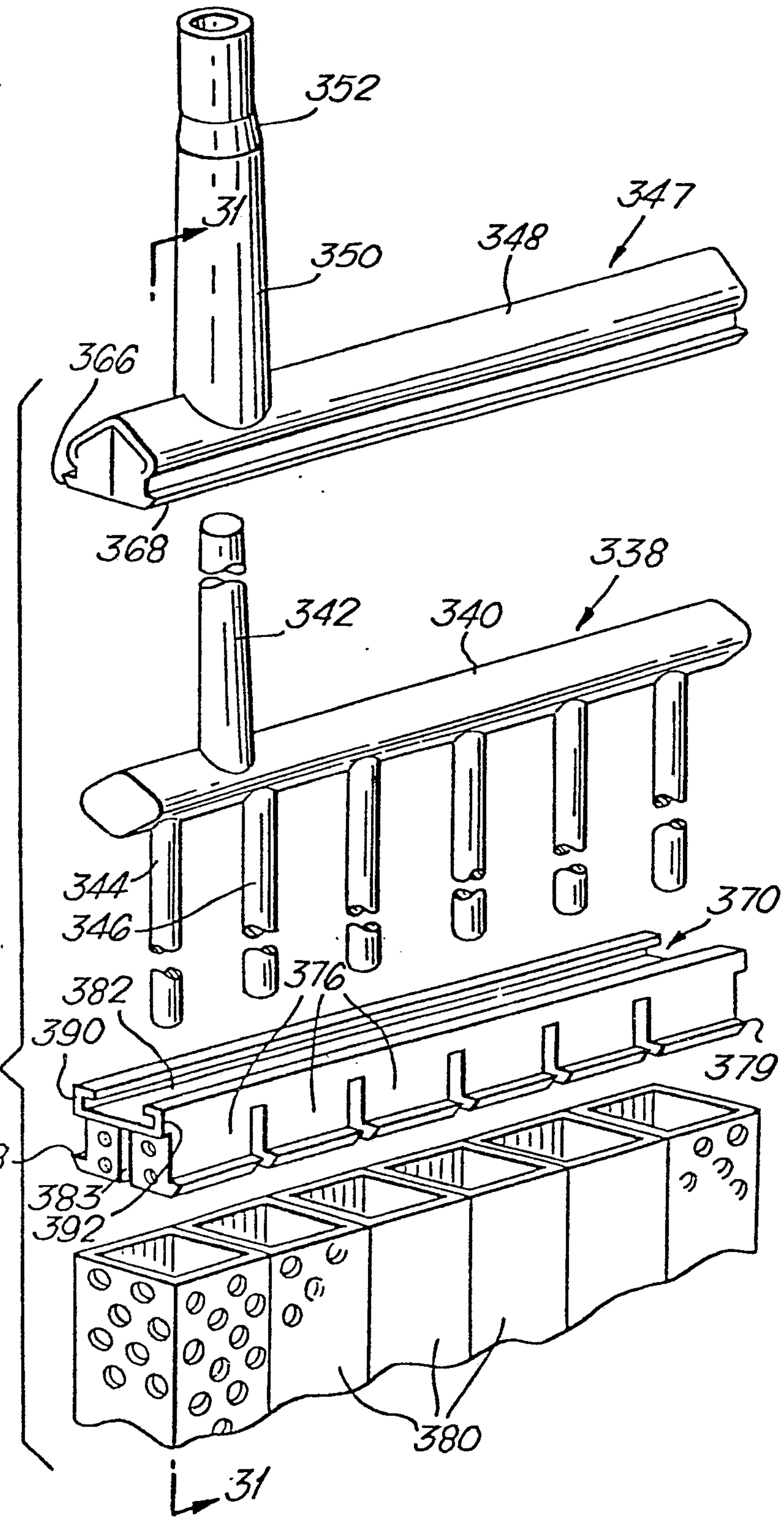
352
31
350
348
347
366
368
338
342
340
344
346
370
382
376
390
379
378
383
392
380
31

Fig. 32.

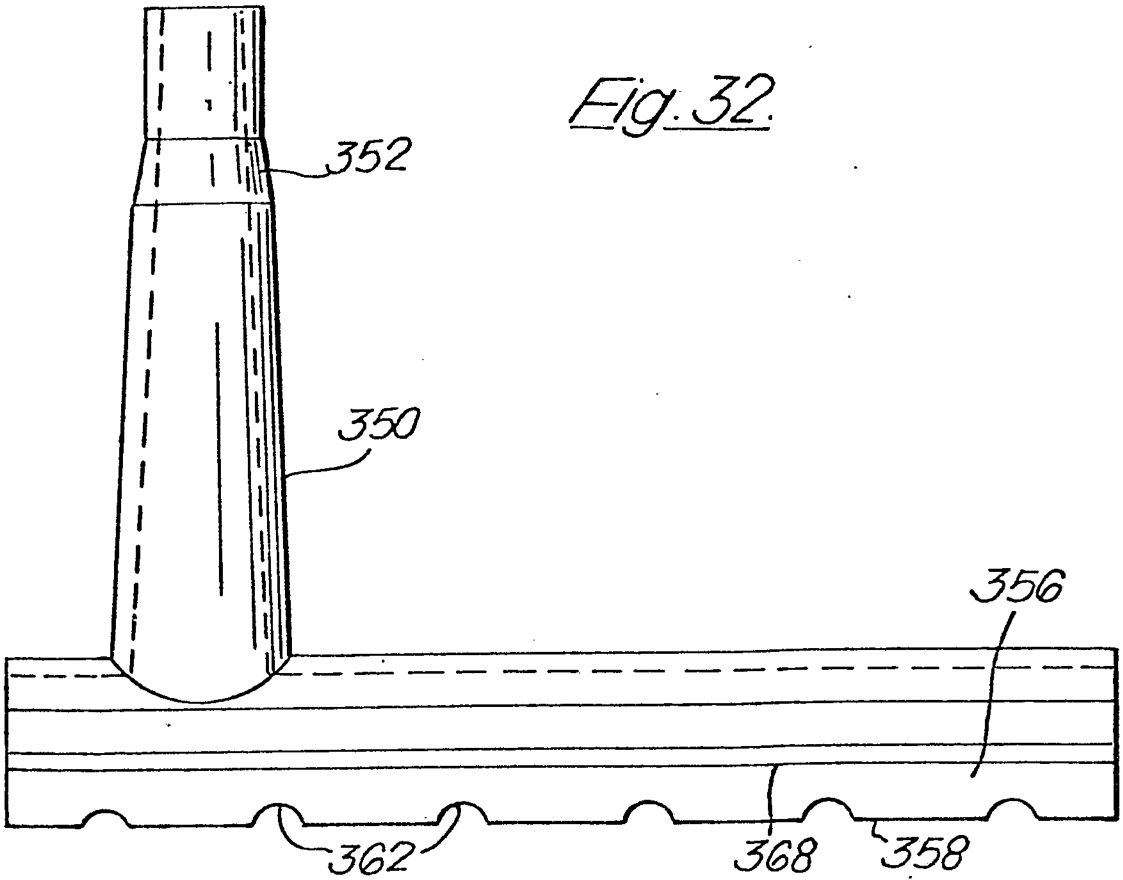


Fig. 33.

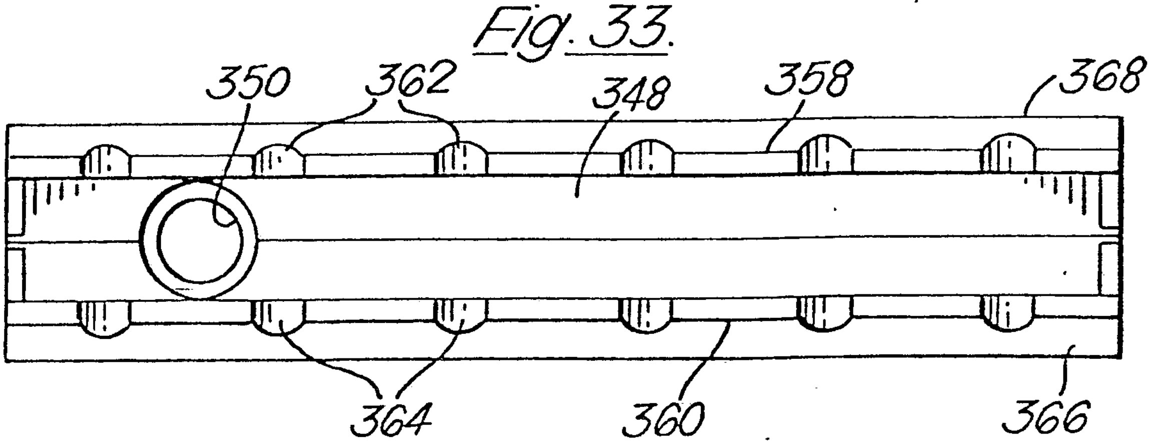


Fig. 34.

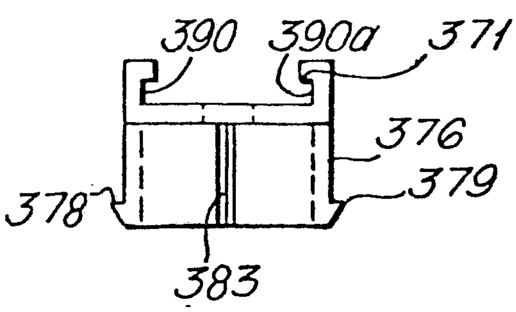

Fig. 35.

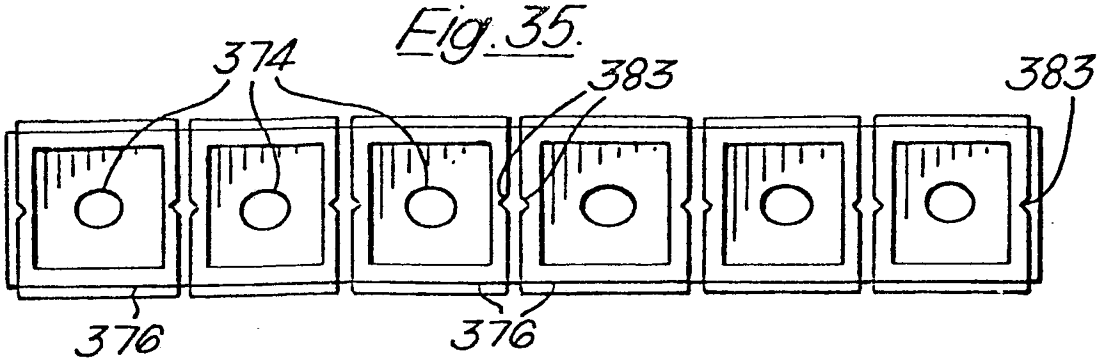


Fig. 36.

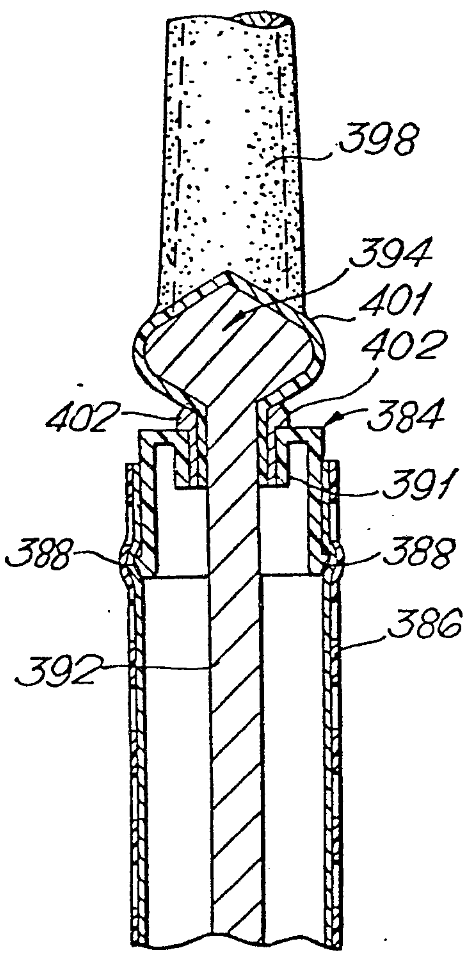


Fig. 37.

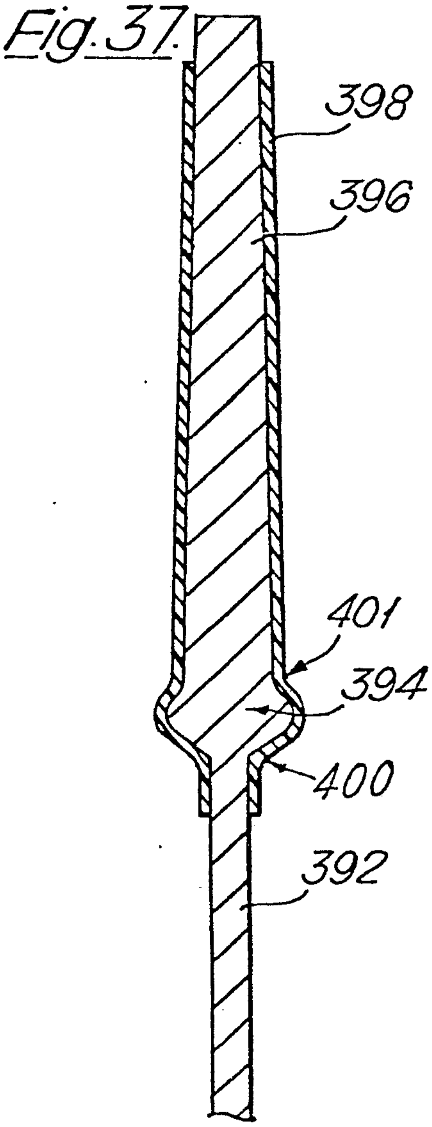


Fig. 38.